# EUROPÄISCHE PATENTANMELDUNG

(11) **EP 3 683 125 A1**
(43) Veröffentlichungstag der Anmeldung: **22.07.2020**
(21) Anmeldenummer: 20161278.5
(22) Anmeldetag: 02.12.2014
(51) Int. Cl.: B62D 65/18

(54) **TRANSPORTFAHRZEUG, FERTIGUNGSANLAGE UND FERTIGUNGSVERFAHREN**

(30) Priorität: 09.12.2013 DE 102013113729
(62) Teilanmeldung aus: 14806247.4
(71) Anmelder: Dürr Systems AG, 74321 Bietigheim-Bissingen (DE)
(72) Erfinder: Straube, Roland, 70794 Filderstadt (DE)
(74) Vertreter: Hoeger, Stellrecht & Partner Patentanwälte mbB

(57) **Zusammenfassung**

Um ein Transportfahrzeug zum Transportieren von Werkstücken bei der Fertigung derselben bereitzustellen, mittels welchem ein effizienter Transport der Werkstücke und somit eine effiziente Fertigung der Werkstücke ermöglicht wird, wird vorgeschlagen, dass das Transportfahrzeug Folgendes umfasst: einen Fahrwagen, mittels welchem das Transportfahrzeug und ein daran angeordnetes Werkstück als Ganzes bewegbar sind; eine Werkstückaufnahmevorrichtung zur Aufnahme des Werkstücks.

## Beschreibung

Die vorliegende Erfindung betrifft ein Transportfahrzeug zum Transportieren von Werkstücken bei der Fertigung, insbesondere zum Transportieren von Fahrzeugkarosserien von Kraftfahrzeugen bei der Endmontage der Kraftfahrzeuge.

Insbesondere bei der Endmontage von Kraftfahrzeugen kann eine Kombination von mehreren Fördervorrichtungen, beispielsweise Hängeförderern und/oder Schienenförderern, vorgesehen sein, um die herzustellenden Kraftfahrzeuge und Teile hiervon nacheinander verschiedenen Fertigungspositionen zuzuführen.

Der vorliegenden Erfindung liegt die Aufgabe zugrunde, ein Transportfahrzeug zum Transportieren von Werkstücken bei der Fertigung derselben bereitzustellen, mittels welchem ein effizienter Transport der Werkstücke und somit eine effiziente Fertigung der Werkstücke ermöglicht wird.

Diese Aufgabe wird erfindungsgemäß durch ein Transportfahrzeug zum Transportieren von Werkstücken bei der Fertigung derselben gelöst, wobei das Transportfahrzeug Folgendes umfasst:
einen Fahrwagen, mittels welchem das Transportfahrzeug und ein daran angeordnetes Werkstück als Ganzes bewegbar sind;
eine Werkstückaufnahmevorrichtung zur Aufnahme des Werkstücks.

Dadurch, dass das Transportfahrzeug einen Fahrwagen zum Bewegen des Transportfahrzeugs und des daran angeordneten Werkstücks sowie eine Werkstückaufnahmevorrichtung zur Aufnahme des Werkstücks umfasst, ist vorzugsweise ein effizienter Transport des Werkstücks bei der Fertigung desselben und somit eine effiziente Fertigung des Werkstücks möglich.

Unter einem Werkstück ist in dieser Beschreibung und den beigefügten Ansprüchen insbesondere allgemein ein Gegenstand zu verstehen, beispielsweise ein bei der Fertigung zu bearbeitender, behandelnder und/oder montierender Gegenstand.

Unter einer Fertigung ist in dieser Beschreibung und den beigefügten Ansprüchen insbesondere eine Bearbeitung, eine Behandlung und/oder eine Montage eines Werkstücks zu verstehen. Beispielsweise umfasst eine Fertigung eine Endmontage, bei welcher mehrere Bauteile des zu fertigenden Werkstücks zusammengebaut werden, um das Werkstück fertigzustellen.

Günstig kann es sein, wenn das Transportfahrzeug mindestens eine Handhabungsvorrichtung zur Bewegung des Werkstücks und/oder mindestens eines Teils des Werkstücks relativ zu dem Fahrwagen umfasst.

Insbesondere kann vorgesehen sein, dass das Transportfahrzeug mindestens eine Handhabungsvorrichtung umfasst, mittels welcher das Werkstück als Ganzes oder Teile des Werkstücks relativ zu dem Fahrwagen und/oder relativ zu weiteren Teilen des Werkstücks bewegbar, insbesondere im Wesentlichen linear bewegbar, sind.

Günstig kann es sein, wenn das Werkstück zur Durchführung mehrerer Fertigungsschritte mittels der Handhabungsvorrichtung in mehreren Werkpositionen anordenbar ist, in welchen vorzugsweise an dem Werkstück voneinander verschiedene Fertigungsschritte durchführbar sind.

Beispielsweise kann vorgesehen sein, dass das Werkstück mittels der Handhabungsvorrichtung bezüglich der Schwerkraftrichtung in mehreren Höhenpositionen, insbesondere relativ zu einem Boden, auf welchem das Transportfahrzeug angeordnet ist, anordenbar ist.

Es kann vorgesehen sein, dass das Werkstück zur Verbindung desselben mit mindestens einem an dem Werkstück anzuordnenden oder angeordneten Bauteil mittels der Handhabungsvorrichtung relativ zu dem mindestens einen Bauteil bewegbar ist.

Beispielsweise kann vorgesehen sein, dass das Werkstück zur Verbindung desselben mit mindestens einem an dem Werkstück anzuordnenden Bauteil mittels der Handhabungsvorrichtung in vertikaler Richtung und/oder in horizontaler Richtung relativ zu dem mindestens einen Bauteil bewegbar ist.

Insbesondere kann vorgesehen sein, dass das Werkstück mittels der Handhabungsvorrichtung in vertikaler Richtung absenkbar ist.

Beispielsweise kann vorgesehen sein, dass ein als Fahrzeugkarosserie ausgebildetes Werkstück auf einen Motor und/oder einen Antriebsstrang des herzustellenden Kraftfahrzeugs mittels mindestens einer Handhabungsvorrichtung absenkbar ist.

Vorteilhaft kann es sein, wenn mindestens eine Handhabungsvorrichtung mindestens eine Hubvorrichtung zum Anhebung und/oder Absenken des Werkstücks relativ zu dem Fahrwagen umfasst.

Insbesondere kann vorgesehen sein, dass eine Hubvorrichtung einen oder mehrere Scherenhubtische umfasst.

Alternativ oder ergänzend zu mindestens einer Hubvorrichtung kann vorgesehen sein, dass die Handhabungsvorrichtung mindestens eine Betätigungsvorrichtung und/oder Bearbeitungsvorrichtung und/oder Montagevorrichtung umfasst. Beispielsweise kann vorgesehen sein, dass die Handhabungsvorrichtung eine oder mehrere Robotervorrichtungen und/oder ein oder mehrere Portale umfasst.

Vorzugsweise ist mindestens eine Handhabungsvorrichtung, beispielsweise eine Robotervorrichtung, um zwei, drei oder mehr Bewegungsachsen bewegbar.

Insbesondere kann vorgesehen sein, dass eine oder mehrere Handhabungsvorrichtungen zwei oder mehr Freiheitsgrade zur Bewegung des Werkstücks und/oder von Teilen des Werkstücks aufweisen.

Günstig kann es sein, wenn eine oder mehrere Betätigungsvorrichtungen, eine oder mehrere Bearbeitungsvorrichtungen und/oder eine oder mehrere Montagevorrichtungen ein oder mehrere Werkzeuge, insbesondere auswechselbare Werkzeuge, aufweisen oder umfassen.

Bei einer Ausgestaltung der Erfindung ist vorgesehen, dass der Fahrwagen des Transportfahrzeugs eine Antriebsvorrichtung zum Fortbewegen des Transportfahrzeugs umfasst, welche insbesondere in den Fahrwagen integriert ist.

Die Antriebsvorrichtung umfasst vorzugsweise einen internen Antrieb, welcher in dem Fahrwagen angeordnet und mit dem Fahrwagen mitbewegbar ist.

Alternativ oder ergänzend hierzu kann vorgesehen sein, dass der Fahrwagen des Transportfahrzeugs mittels eines externen Antriebs, beispielsweise mittels einer externen Fördervorrichtung, antreibbar ist.

Vorteilhaft kann es sein, wenn der Fahrwagen, insbesondere das gesamte Transportfahrzeug, fahrerlos, selbstfahrend und/oder autonom bewegbar ist. Ein externer Antrieb, beispielsweise eine Fördervorrichtung zur Förderung des gesamten Transportwagens, ist dann vorzugsweise entbehrlich.

Günstig kann es sein, wenn der Fahrwagen ein bodenbasierter und/oder bodengebundener Fahrwagen ist.

Der Fahrwagen ist vorzugsweise auf einem flachen, ebenen Boden bewegbar. Eine spezielle Führung oder Aufnahme für den Fahrwagen ist vorzugsweise entbehrlich.

Bei einer Ausgestaltung der Erfindung kann vorgesehen sein, dass die Werkstückaufnahmevorrichtung mehrere auswechselbare Aufnahmeelemente zur Aufnahme von Werkstücken unterschiedlicher Art und/oder Größe umfasst.

Günstig kann es sein, wenn mindestens ein Aufnahmeelement ein Verbindungselement, beispielsweise einen Vorsprung und/oder einen Pin, umfasst, welches mit einem Vorsprung und/oder einer Aussparung und/oder einer Aufnahme eines Werkstücks und/oder einer Handhabungsvorrichtung in Eingriff bringbar ist, insbesondere lösbar an dem Werkstück und/oder an der Handhabungsvorrichtung festlegbar ist.

Alternativ oder ergänzend hierzu kann vorgesehen sein, dass mindestens ein Aufnahmeelement mindestens eine an ein Werkstück angepasste Auflagefläche, insbesondere ein Pad, umfasst, mittels welchem vorzugsweise eine zuverlässige Verbindung zwischen dem Aufnahmeelement und dem Werkstück herstellbar ist.

Vorzugsweise umfasst die Werkstückaufnahmevorrichtung eine Verriegelungsvorrichtung, mittels welcher ein oder mehrere Aufnahmeelemente der Werkstückaufnahmevorrichtung an einer Handhabungsvorrichtung, beispielsweise an einer oder mehreren Hubvorrichtungen, lösbar festlegbar sind.

Vorteilhaft kann es sein, wenn mehrere verschiedene Aufnahmeelemente zur Aufnahme von Werkstücken unterschiedlicher Art und/oder Größe mit dem Transportfahrzeug mitführbar, insbesondere in geeigneten Aufnahmen und/oder Lagerpositionen anordenbar, sind.

Günstig kann es sein, wenn zur Anordnung eines Werkstücks an der Werkstückaufnahmevorrichtung dieses, insbesondere automatisch, identifizierbar ist, so dass die passenden Aufnahmeelemente zur Aufnahme des Werkstücks auswählbar und an der Werkstückaufnahmevorrichtung anordenbar sind, beispielsweise mittels mindestens einer Handhabungsvorrichtung, insbesondere mittels mindestens einer Betätigungsvorrichtung und/oder Behandlungsvorrichtung und/oder Montagevorrichtung.

Es kann vorgesehen sein, dass das Transportfahrzeug eine Aufnahmeöffnung zur Aufnahme einer oder mehrerer Transporteinheiten umfasst, an welchen beispielsweise an dem Werkstück anzuordnende Bauteile anordenbar sind.

Eine Aufnahmeöffnung ist vorzugsweise eine Ausnehmung für eine Transporteinheit, insbesondere für eine bodenbasierte oder bodengebundene Transporteinheit.

Günstig kann es sein, wenn mindestens eine Transporteinheit mittels des Transportfahrzeugs durch Verfahren des Transportfahrzeugs auf dem Boden und/oder durch Verfahren der Transporteinheit auf dem Boden aufnehmbar ist.

Vorzugsweise ist mittels mindestens einer Transporteinheit mindestens ein an dem Werkstück anzuordnendes Bauteil dem Werkstück zuführbar.

Beispielsweise kann vorgesehen sein, dass ein oder mehrere Bauteile eines Kraftfahrzeugs mittels mindestens einer Transporteinheit der an dem Transportfahrzeug angeordneten Fahrzeugkarosserie zuführbar sind.

Der Fahrwagen des Transportfahrzeugs weist vorzugsweise zwei Schenkel auf, welche insbesondere mittels eines Verbindungsteils miteinander verbunden sind.

Mindestens eine Transporteinheit ist vorzugsweise zur Aufnahme derselben mittels des Transportfahrzeugs zwischen die beiden Schenkel des Fahrwagens einbringbar.

Die zwei Schenkel umgeben vorzugsweise einen Aufnahmebereich des Transportfahrzeugs.

Günstig kann es sein, wenn der Fahrwagen zumindest näherungsweise C-förmig ausgebildet ist, insbesondere einen im Wesentlichen C-förmigen horizontalen Querschnitt aufweist.

Vorzugsweise sind die Schenkel und/oder der Verbindungsteil des Fahrwagens im Wesentlichen quaderförmig, insbesondere im Wesentlichen stabförmig oder balkenförmig, ausgebildet.

Der Aufnahmebereich ist vorzugsweise im Wesentlichen quaderförmig ausgebildet. Insbesondere kann vorgesehen sein, dass der Aufnahmebereich einen im Wesentlichen rechteckigen horizontalen Querschnitt aufweist.

Mindestens eine Transporteinheit weist vorzugsweise eine dem Aufnahmebereich entsprechende Form auf. Vorzugsweise ist die Transporteinheit in der Aufnahmeöffnung anordenbar. Insbesondere kann vorgesehen sein, dass die Transporteinheit zum teilweisen oder vollständigen Füllen der Aufnahmeöffnung des Transportfahrzeugs in der Aufnahmeöffnung anordenbar ist.

Mittels der mindestens einen Transporteinheit ist vorzugsweise eine im Wesentlichen durchgängige begehbare Fläche des Fahrwagens herstellbar.

Günstig kann es sein, wenn mittels mindestens einer Transporteinheit Innenraumteile, Aufhängungsteile, Teile des Antriebsstrangs, Teile des Motors, Teile des Getriebes und/oder der gesamte Antriebsstrang einschließlich des Motors und des Getriebes dem Transportfahrzeug zuführbar sind.

Alternativ oder ergänzend hierzu kann vorgesehen sein, dass mittels mindestens einer Transporteinheit Teile der Fahrzeugelektrik und/oder Fahrzeugkarosserieteile des herzustellenden Kraftfahrzeugs dem Transportfahrzeug zuführbar sind.

Es kann jedoch auch vorgesehen sein, dass mindestens eine Transporteinheit als eine Arbeitsplattform (Montageplattform) ausgebildet ist, welche insbesondere zur Herstellung einer durchgängigen begehbaren Fläche in der Aufnahmeöffnung des Transportfahrzeugs anordenbar ist.

Vorteilhaft kann es sein, wenn jeder Schenkel des Transportfahrzeugs jeweils mindestens eine Handhabungsvorrichtung, insbesondere mindestens eine Hubvorrichtung, insbesondere mindestens einen Scherenhubtisch, umfasst.

Auf diese Weise kann das mittels der Werkstückaufnahmevorrichtung an der einen oder den mehreren Handhabungsvorrichtungen angeordnete Werkstück beidseitig oberhalb der Aufnahmeöffnung des Transportfahrzeugs anordenbar sein.

Mittels mindestens einer Transporteinheit ist insbesondere ein an dem Werkstück anzuordnendes Bauteil einfach in einen Bereich unterhalb des Werkstücks einbringbar.

Bei einer Ausgestaltung der Erfindung ist vorgesehen, dass das Transportfahrzeug eine Lagervorrichtung zur Aufnahme von an dem Werkstück anzuordnenden Bauteilen und/oder zur Aufnahme von zur Montage des Werkstücks benötigten Hilfsmitteln umfasst.

Eine Lagervorrichtung ist insbesondere ein Warenkorb, ein Magazin und/oder eine Werkzeughalterung, beispielsweise zur Aufnahme von auswechselbaren Werkzeugen einer Betätigungsvorrichtung und/oder einer Behandlungsvorrichtung und/oder einer Montagevorrichtung, beispielsweise einer Robotervorrichtung.

Die Lagervorrichtung kann beispielsweise als eine Anhängervorrichtung ausgebildet sein.

Vorzugsweise ist die Anhängervorrichtung mittels eines Kupplungselements an dem Transportfahrzeug festlegbar, insbesondere lösbar festlegbar.

Werkstücke können insbesondere Fahrzeuge, beispielsweise Kraftfahrzeuge, oder Teile hiervon sein. Beispielsweise kann ein Werkstück eine Fahrzeugkarosserie und/oder ein teilweise fertiggestelltes Fahrzeug, insbesondere Kraftfahrzeug, sein.

Ferner kann vorgesehen sein, dass ein Werkstück ein Flugzeug und/oder ein Teil eines Flugzeugs ist.

Das Transportfahrzeug eignet sich insbesondere zur Verwendung in einer Rohbauanlage, einer Lackiererei und/oder einer Endmontageanlage einer Fertigungsanlage zur Fertigung des Werkstücks.

Vorzugsweise ist ein zu fertigendes Werkstück durchgängig über eine gesamte Endmontage hinweg an einem Transportfahrzeug angeordnet.

Ein Transportfahrzeug ist insbesondere ein fahrerloses Transportsystem (FTS).

Das erfindungsgemäße Transportfahrzeug eignet sich insbesondere zur Verwendung in einem Transportsystem zum Transport von Werkstücken bei der Fertigung derselben.

Die vorliegende Erfindung betrifft daher auch ein Transportsystem zum Transport von Werkstücken bei der Fertigung derselben, wobei das Transportsystem vorzugsweise ein oder mehrere erfindungsgemäße Transportfahrzeuge umfasst.

Das erfindungsgemäße Transportsystem weist vorzugsweise einzelne oder mehrere der im Zusammenhang mit dem erfindungsgemäßen Transportfahrzeug beschriebenen Merkmale und/oder Vorteile auf.

Günstig kann es sein, wenn das Transportsystem eine Führungsvorrichtung zur Führung des einen Transportfahrzeugs oder der mehreren Transportfahrzeuge, insbesondere längs vorgegebener oder vorgebbarer Wege, umfasst.

Die Führungsvorrichtung ist vorzugweise programmierbar, steuerbar und/oder regelbar, beispielsweise durch Vorprogrammieren von Wegen und/oder durch Steuerung mittels GPS-Sensoren.

Günstig kann es sein, wenn die Führungsvorrichtung als eine mechanische Führungsvorrichtung ausgebildet ist, mittels welcher ein oder mehrere Transportfahrzeuge mechanisch, beispielsweise mittels mechanischer Leitelemente und/oder eines externen Antriebs, führbar sind.

Alternativ oder ergänzend hierzu kann vorgesehen sein, dass die Führungsvorrichtung eine elektrische oder elektronische Führungsvorrichtung ist. Die Transportfahrzeuge sind dann insbesondere durch geeignete Programmierung, Steuerung und/oder Regelung, vorzugsweise autonom, führbar.

Beispielsweise kann vorgesehen sein, dass eine Führungsvorrichtung elektrische oder elektronische Führungselemente, insbesondere Induktionsschleifen, welche beispielsweise in einem Boden integriert sind, oder Lichtschranken, umfasst.

Günstig kann es sein, wenn das Transportsystem eine Kommunikationsvorrichtung und/oder einen oder mehrere Informationsträger, beispielsweise sogenannte Smart-Chips, umfasst, insbesondere um Informationen über die Positionen der Transportfahrzeuge und/oder die daran angeordneten Werkstücke aufzunehmen, zu speichern und/oder weiterzugeben.

Das erfindungsgemäße Transportsystem eignet sich insbesondere zur Verwendung in einer Fertigungsanlage zur Fertigung von Werkstücken.

Die vorliegende Erfindung betrifft daher auch eine Fertigungsanlage zur Fertigung von Werkstücken, insbesondere von Kraftfahrzeugen, welche mindestens ein erfindungsgemäßes Transportsystem umfasst.

Das erfindungsgemäße Transportsystem kann insbesondere in Kombination mit oder als Ersatz für Rollenbahnvorrichtungen, Schubplattformen, Hängebahnen und/oder Band- oder Plattenförderer vorgesehen sein.

Mittels des erfindungsgemäßen Transportsystems ist vorzugweise eine Linienproduktion und/oder eine Boxenfertigung möglich. Insbesondere kann für unterschiedliche Fertigungsschritte bei der Fertigung der Werkstücke wahlweise eine Linienproduktion oder eine Boxenfertigung vorgesehen sein.

Die erfindungsgemäße Fertigungsanlage weist vorzugsweise einzelne oder mehrere der im Zusammenhang mit dem erfindungsgemäßen Transportfahrzeug und/oder dem erfindungsgemäßen Transportsystem beschriebenen Merkmale und/oder Vorteile auf.

Vorteilhaft kann es sein, wenn jedem Werkstück, insbesondere jeder Fahrzeugkarosserie eines zu fertigenden Kraftfahrzeugs und/oder jedem zu fertigenden Kraftfahrzeug, jeweils ein Transportfahrzeug zugeordnet ist.

Alternativ hierzu kann vorgesehen sein, dass mehrere Werkstücke gemeinsam einem Transportfahrzeug zugeordnet sind.

Bei einer Ausgestaltung der Erfindung ist vorgesehen, dass die Fertigungsanlage eine Fertigungsanlage zur Fertigung von Kraftfahrzeugen ist und dass mittels Transportfahrzeugen des Transportsystems Fahrzeugkarosserien der zu fertigenden Kraftfahrzeuge aufnehmbar und nacheinander verschiedenen Fertigungspositionen zuführbar sind.

Unter einer Fertigungsposition ist in dieser Beschreibung und den beigefügten Ansprüchen eine Position des Transportfahrzeugs und/oder des zu fertigenden Kraftfahrzeugs zu verstehen, an welcher ein Fertigungsschritt, beispielsweise die Montage eines weiteren Bauteils, durchführbar ist.

Günstig kann es sein, wenn das Transportsystem Bestandteil einer Endmontageanlage der Fertigungsanlage ist, und wenn die Fahrzeugkarosserien der zu fertigenden Kraftfahrzeuge von einer Lackieranlage der Fertigungsanlage, insbesondere direkt, den Transportfahrzeugen des Transportsystems zuführbar und/oder als Bestandteil von fertiggestellten Kraftfahrzeugen von den Transportfahrzeugen entfernbar sind.

Insbesondere kann vorgesehen sein, dass die Fertigungsanlage eine Fertigungsanlage zur Fertigung von Kraftfahrzeugen ist, dass das Transportsystem Bestandteil einer Endmontageanlage der Fertigungsanlage ist und dass die Fahrzeugkarosserien während der gesamten Endmontage der zu fertigenden Kraftfahrzeuge an den Transportfahrzeugen angeordnet sind.

Bei einer Ausgestaltung der Erfindung kann vorgesehen sein, dass die Fertigungsanlage eine Fertigungsanlage zur Fertigung von Kraftfahrzeugen ist und dass ein Antriebsstrang, eine Innenausstattung, eine Aufhängung und/oder Karosserieteile des Fahrzeugs an einer Fahrzeugkarosserie des zu fertigenden Kraftfahrzeugs anordenbar sind, während die Fahrzeugkarosserie an einem Transportfahrzeug angeordnet ist.

Beispielsweise kann vorgesehen sein, dass folgende Bauteile des zu fertigenden Kraftfahrzeugs montierbar sind, während die Fahrzeugkarosserie an einem Transportfahrzeug angeordnet ist: Türen, Kotflügel, Stoßfänger, Spoiler, Außenspiegel, Front- und/oder Heckschürzen, Schwellerverkleidungen, Hauben, insbesondere Motor- und/oder Kofferraumhauben, und/oder Scheiben.

Während der unterschiedlichen Fertigungsschritte ist die Fahrzeugkarosserie mittels der Handhabungsvorrichtung vorzugsweise in voneinander verschiedenen Werkpositionen oder Werkstellungen anordenbar.

Beispielsweise ist die Karosserie für unterschiedliche Fertigungsschritte an unterschiedlichen Fertigungspositionen in unterschiedlichen Höhen anordenbar, insbesondere um die Montage zu erleichtern.

Durch die Verwendung der erfindungsgemäßen Transportfahrzeuge und/oder des erfindungsgemäßen Transportsystems ist vorzugsweise eine aufwendige Boden- und/oder Grubengestaltung wenigstens abschnittsweise entbehrlich.

Vorzugsweise entfallen Übergabeprozesse zwischen verschiedenen Förderanlagen oder Fördersystemen, insbesondere innerhalb der Endmontage, oder werden zumindest vereinfacht und/oder in der Anzahl reduziert.

Das Transportsystem und somit vorzugsweise auch die gesamte Fertigungsanlage sind vorzugsweise mit geringem Aufwand, geringen Statikanforderungen und somit kostengünstig herstellbar und zudem vorzugsweise flexibel einsetzbar und schnell umrüstbar.

Die vorliegende Erfindung betrifft ferner ein Fertigungsverfahren zum Fertigen von Werkstücken, insbesondere Kraftfahrzeugen.

Der Erfindung liegt diesbezüglich die Aufgabe zugrunde, ein Fertigungsverfahren bereitzustellen, mittels welchem Werkstücke bei der Fertigung derselben effizient transportierbar sind.

Diese Aufgabe wird erfindungsgemäß durch ein Fertigungsverfahren zum Fertigen von Werkstücken, insbesondere Kraftfahrzeugen, gelöst, wobei das Fertigungsverfahren Folgendes umfasst:
Anordnen eines oder mehrerer Werkstücke an einer Werkstückaufnahmevorrichtung eines Transportfahrzeugs;
Bewegen des Transportfahrzeugs samt des einen oder der mehreren daran angeordneten Werkstücke mittels eines Fahrwagens des Transportfahrzeugs.

Das erfindungsgemäße Fertigungsverfahren weist vorzugsweise einzelne oder mehrere der im Zusammenhang mit dem erfindungsgemäßen Transportfahrzeug, dem erfindungsgemäßen Transportsystem und/oder der erfindungsgemäßen Fertigungsanlage beschriebenen Merkmale und/oder Vorteile auf.

Günstig kann es sein, wenn das Werkstück oder mindestens ein Teil des Werkstücks mittels einer Handhabungsvorrichtung des Transportfahrzeugs relativ zu dem Fahrwagen bewegt wird.

Bei einer Ausgestaltung der Erfindung ist vorgesehen, dass das Werkstück mittels des Transportfahrzeugs nacheinander verschiedenen Fertigungspositionen zugeführt wird.

Vorteilhaft kann es sein, wenn das Werkstück eine Fahrzeugkarosserie eines Kraftfahrzeugs ist.

Dabei kann vorgesehen sein, dass das Werkstück an einer Startposition einer Endmontageanlage zur Endmontage des Kraftfahrzeugs, insbesondere als Rohkarosse, an dem Transportfahrzeug angeordnet wird.

Alternativ oder ergänzend hierzu kann vorgesehen sein, dass das Werkstück an einer Endposition der Endmontageanlage zur Endmontage des Kraftfahrzeugs, insbesondere als fertiggestelltes Fahrzeug, von dem Transportfahrzeug entfernt wird.

Vorteilhaft kann es sein, wenn das Werkstück, insbesondere die Fahrzeugkarosserie des Kraftfahrzeugs, an der Startposition der Endmontageanlage an dem Transportfahrzeug angeordnet und erst an der Endposition der Endmontageanlage von dem Transportfahrzeug entfernt wird.

Das Werkstück ist vorzugweise während der gesamten Endmontage an dem Transportfahrzeug angeordnet.

Ferner können das erfindungsgemäße Transportfahrzeug, das erfindungsgemäße Transportsystem, die erfindungsgemäße Fertigungsanlage und/oder das erfindungsgemäße Fertigungsverfahren einzelne oder mehrere der nachfolgend beschriebenen Merkmale und/oder Vorteile aufweisen.

Vorzugsweise ist die Layoutplanung der Produktion, insbesondere einer Endmontage, durch die Verwendung von erfindungsgemäßen Transportfahrzeugen, insbesondere eines erfindungsgemäßen Transportsystems, sehr flexibel.

Es kann vorgesehen sein, dass standardisierte und/oder nicht versionsabhängige Arbeitsschritte (Fertigungsschritte) in Linien abgearbeitet werden.

Günstig kann es sein, wenn das Transportfahrzeug und/oder eine Transporteinheit autonom in einen Logistikbereich bewegbar, insbesondere fahrbar, ist, beispielsweise um zur Fertigung des Werkstücks, insbesondere zur Montage, nötige Bauteile abzuholen. Insbesondere kann ein benötigter Warenkorb mit zu montierenden Bauteilen abgeholt werden.

Es kann vorgesehen sein, dass das mit den zu montierenden Bauteilen versehene Transportfahrzeug und/oder die mit den zu montierenden Bauteilen versehene Transporteinheit zusammen mit einem Werkstück, insbesondere einer an der Werkstückaufnahmevorrichtung des Transportfahrzeugs angeordneten Fahrzeugkarosserie, zur Montage in einen Boxenbereich gebracht, insbesondere gefahren, wird.

Vorteilhaft kann es sein, wenn das Transportfahrzeug eine als Hochzeitsplattform ausgebildete Transporteinheit abholen und/oder aufnehmen kann. Die Hochzeitsplattform ist vorzugsweise mit dem Transportfahrzeug koppelbar.

Vorzugsweise ist eine Transporteinheit mit einem Transportfahrzeug koppelbar, insbesondere in der Aufnahmeöffnung des Fahrwagens lösbar festlegbar, und unter Verwendung der Antriebsvorrichtung des Fahrwagens zusammen mit dem gesamten Transportfahrzeug bewegbar.

Ein separater Antrieb für eine Transporteinheit, insbesondere für eine Hochzeitsplattform, ist dann vorzugsweise entbehrlich und/oder kann wenigstens zeit- und/oder abschnittsweise deaktiviert sein.

Es kann vorgesehen sein, dass mittels des Transportfahrzeugs nach erfolgter Hochzeit, das heißt nach erfolgter Montage eines Antriebsstrangs an der Fahrzeugkarosserie, die Hochzeitsplattform zurück in den Logistikbereich bringbar ist.

Die Logistikbereiche einer Fertigungsanlage können dann vorzugsweise völlig frei platziert werden. Insbesondere ist ein sehr flexibles Layout der Fertigungsanlage denkbar.

Eine Energieversorgung eines Transportfahrzeugs erfolgt beispielsweise über Induktionsschleifen, beispielsweise bodenverlegte Induktionsschleifen.

Induktionsschleifen können beispielsweise auf einer Bodenplatte, welche einen Boden der Fertigungsanlage bildet, aufgebracht werden. Alternativ oder ergänzend hierzu kann eine Integration von Induktionsschleifen in einer Bodenplatte, insbesondere in einem Boden, vorgesehen sein.

Ein besonders stabiles Fundament oder Grubenarbeiten sind bei der Verwendung des erfindungsgemäßen Transportsystems vorzugsweise entbehrlich. Zudem kann eine Deckenkonstruktion rein selbsttragend ausgebildet sein (beispielsweise ähnlich einer Tennishallendecke).

Vorzugsweise können durch die Verwendung des erfindungsgemäßen Transportsystems Investitionskosten reduziert werden.

Ein Transportfahrzeug ermöglicht vorzugweise eine Kombination von vertikaler und horizontaler Fördertechnik.

Vorzugsweise ist ein Werkstück mittels eines Transportfahrzeugs, insbesondere mittels des Fahrwagens des Transportfahrzeugs, in horizontaler Richtung und, insbesondere mittels mindestens einer Handhabungsvorrichtung, beispielsweise mittels mindestens einer Hubvorrichtung, in vertikaler Richtung bewegbar.

Vorteilhaft kann es sein, wenn verschiedene Typen von Kraftfahrzeugen, welche auf unterschiedlichen Karosserie-Plattformen basieren, unter Verwendung desselben Transportfahrzeugs herstellbar sind. Insbesondere kann eine Variantenproduktion leicht abbildbar sein, beispielsweise durch Ermöglichung unterschiedlicher Karosserie-Plattformen unter Verwendung einer geeigneten Schnittstelle.

Vorzugsweise ist eine separate Hochzeitsfördertechnik, das heißt eine separate Fördervorrichtung zum Fördern eines Antriebsstrangs zu der Fertigungsposition, an welcher die Hochzeit stattfindet, entbehrlich.

Ein Layout einer Fertigungsanlage, bei welcher das erfindungsgemäße Transportsystem vorgesehen ist, ist vorzugsweise flexibel umgestaltbar, insbesondere da Induktionsschleifen zur Energieversorgung einfach entfernt und neu verlegt werden können. Ein Stahlbau, aufwendige Fördertechnik und/oder ortsfest montierte Handhabungssysteme sind dabei vorzugsweise nicht oder in reduziertem Umfang umzubauen.

Ein erfindungsgemäßes Transportfahrzeug kann insbesondere mit einem Warenkorb kombiniert werden.

Vorzugsweise ergibt sich ein hoher Automatisierungsgrad.

Insbesondere im eingefahrenen Zustand einer Handhabungsvorrichtung, insbesondere der Hubvorrichtungen, weist das Transportfahrzeug vorzugsweise eine Gesamthöhe von höchstens ungefähr 40 cm, beispielsweise höchstens ungefähr 30 cm, insbesondere ungefähr 25 cm, auf. Hierdurch kann eine einfache Bodenmontage aller Anbauteile eines Kraftfahrzeugs ermöglicht werden.

Die Verwendung des erfindungsgemäßen Transportfahrzeugs ermöglicht vorzugsweise eine deutliche Verringerung der Gebäude-Investitionskosten.

Vorzugsweise ist eine Datenvernetzung gemäß dem Standard Industrie 4.0 möglich und/oder wünschenswert.

Der Fahrwagen ist insbesondere mittels Rädern oder Rollen auf einem Boden bewegbar, beispielsweise verfahrbar.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Transportfahrzeugs eines Transportsystems, bei welchem eine Handhabungsvorrichtung vorgesehen ist, die zwei als Scherenhubtische ausgebildete Hubvorrichtungen umfasst, wobei die Hubvorrichtungen in einem ausgefahrenen Zustand angeordnet sind;
- Fig. 2: eine der Fig. 1 entsprechende schematische perspektivische Darstellung des Transportfahrzeugs, wobei die Hubvorrichtungen in einem eingefahrenen Zustand angeordnet sind;
- Fig. 3: eine schematische Seitenansicht des Transportfahrzeugs aus Fig. 2, mit Blickrichtung in Richtung des Pfeiles 3 in Fig. 2;
- Fig. 4: eine schematische Draufsicht von oben auf das Transportfahrzeug aus Fig. 2, mit Blickrichtung in Richtung des Pfeiles 4 in Fig. 2;
- Fig. 5: einen schematischen vertikalen Schnitt durch einen Schenkel des Transportfahrzeugs aus Fig. 2 längs der Linie 5-5 in Fig. 4;
- Fig. 6: einen schematischen vertikalen Schnitt durch einen Schenkel des Transportfahrzeugs aus Fig. 2 längs der Linie 6-6 in Fig. 4;
- Fig. 7: eine schematische Draufsicht auf eine Vorderseite des Transportfahrzeugs aus Fig. 2 mit Blickrichtung in Richtung des Pfeiles 7 in Fig. 2;
- Fig. 8: eine schematische perspektivische teiltransparente Darstellung des Transportfahrzeugs aus Fig. 2;
- Fig. 9: eine vergrößerte Darstellung einer Hubvorrichtung samt einer Werkstückaufnahmevorrichtung des Transportfahrzeugs aus Fig. 2;
- Fig. 10: eine vergrößerte schematische perspektivische und teilweise transparente Darstellung der Hubvorrichtung und der Werkstückaufnahmevorrichtung aus Fig. 9;
- Fig. 11: eine schematische perspektivische Darstellung des Transportfahrzeugs aus Fig. 1, wobei ein Werkstück an einer Werkstückaufnahmevorrichtung des Transportfahrzeugs angeordnet ist und wobei eine Transporteinheit zum Zuführen von Bauteilen zu dem Werkstück dargestellt ist;
- Fig. 12: eine der Fig. 11 entsprechende schematische perspektivische Darstellung des Transportfahrzeugs, des Werkstücks und der Transporteinheit, wobei die Transporteinheit in einer Aufnahmeöffnung des Transportfahrzeugs angeordnet ist;
- Fig. 13: eine der Fig. 12 entsprechende schematische Darstellung des Transportfahrzeugs, des Werkstücks und der Transporteinheit, wobei das Werkstück auf die an der Transporteinheit angeordneten Bauteile abgelassen wird, um diese an dem Werkstück anzuordnen;
- Fig. 14: eine schematische perspektivische Darstellung des Transportfahrzeugs aus Fig. 1, eines daran angeordneten Werkstücks und eines an dem Transportfahrzeug angeordneten Anhängerelements;
- Fig. 15: eine schematische perspektivische Darstellung mehrerer Transportfahrzeuge, mehrerer daran angeordneter Werkstücke und mehrerer daran angeordneter Anhängerelemente, wobei die Transportfahrzeuge samt der Werkstücke und der Anhängerelemente mittels einer externen Führungsvorrichtung geführt bewegbar sind und wobei die Hubvorrichtungen der Transportfahrzeuge in dem eingefahrenen Zustand vorliegen;
- Fig. 16: eine der Fig. 15 entsprechende schematische Darstellung der Transportfahrzeuge, der daran angeordneten Werkstücke und der daran angeordneten Anhängerelemente, wobei die Hubvorrichtungen der Transportfahrzeuge im ausgefahrenen Zustand vorliegen;
- Fig. 17: eine schematische perspektivische Darstellung einer zweiten Ausführungsform eines Transportfahrzeugs, bei welchem eine Aufnahmeöffnung des Transportfahrzeugs mit einem ebenen plattenförmigen Element, insbesondere einer ebenen Transporteinheit, versehen ist, so dass eine durchgängige begehbare Montageplattform gebildet ist;
- Fig. 18: eine schematische Draufsicht von oben auf mehrere Transportfahrzeuge, welche insbesondere für eine Linienfertigung mittels einer externen Antriebsvorrichtung bewegbar sind;
- Fig. 19: eine der Fig. 17 entsprechende schematische perspektivische Darstellung einer dritten Ausführungsform eines Transportfahrzeugs, wobei das Transportfahrzeug mit einer Lagervorrichtung, insbesondere einem Warenkorb oder einer Werkzeughalterung, versehen ist;
- Fig. 20: eine der Fig. 17 entsprechende schematische perspektivische Darstellung einer vierten Ausführungsform eines Transportfahrzeugs, bei welcher eine als Robotervorrichtung ausgebildete Handhabungsvorrichtung vorgesehen ist;
- Fig. 21: eine der Fig. 17 entsprechende schematische perspektivische Darstellung einer fünften Ausführungsform eines Transportfahrzeugs, wobei eine Transporteinheit in horizontaler Richtung, insbesondere von vorne, in eine Aufnahmeöffnung des Transportfahrzeugs einbringbar und aus derselben entfernbar ist;
- Fig. 22: eine der Fig. 17 entsprechende schematische perspektivische Darstellung einer sechsten Ausführungsform eines Transportfahrzeugs, wobei eine Transporteinheit in vertikaler Richtung von unten oder von oben in eine Aufnahmeöffnung des Transportfahrzeugs einbringbar ist;
- Fig. 23: eine schematische Seitenansicht einer siebten Ausführungsform eines Transportfahrzeugs, bei welcher eine als Robotervorrichtung ausgebildete Betätigungsvorrichtung und eine Werkzeughalterung zur Aufnahme von Werkzeug für die Robotervorrichtung vorgesehen sind; und

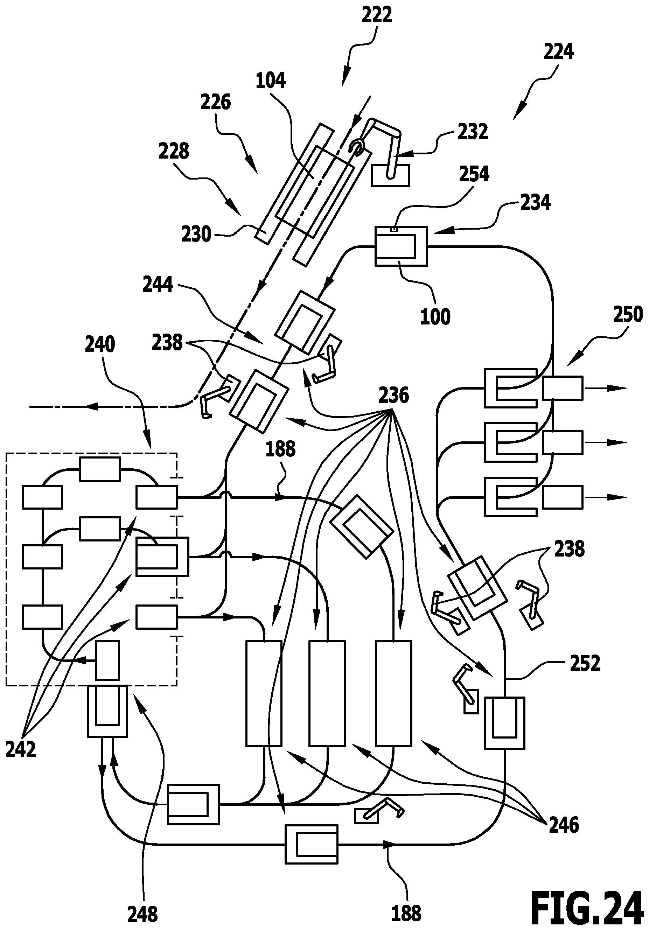

- Fig. 24: eine schematische Darstellung einer Fertigungsanlage zur Fertigung von Werkstücken, bei welcher ein Transportsystem mit mehreren Transportfahrzeugen vorgesehen ist.

Gleiche oder funktional äquivalente Elemente sind in sämtlichen Figuren mit denselben Bezugszeichen versehen.

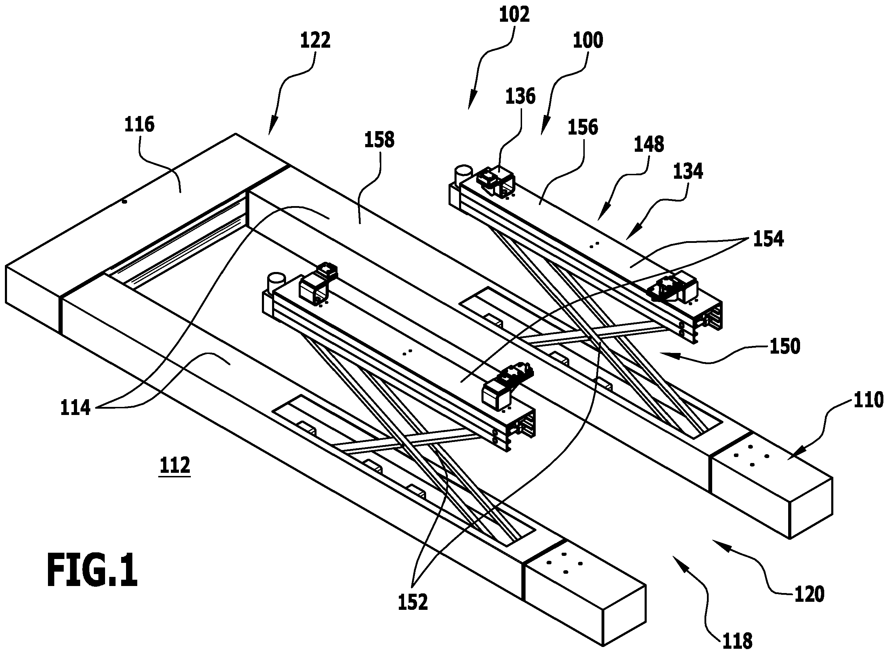

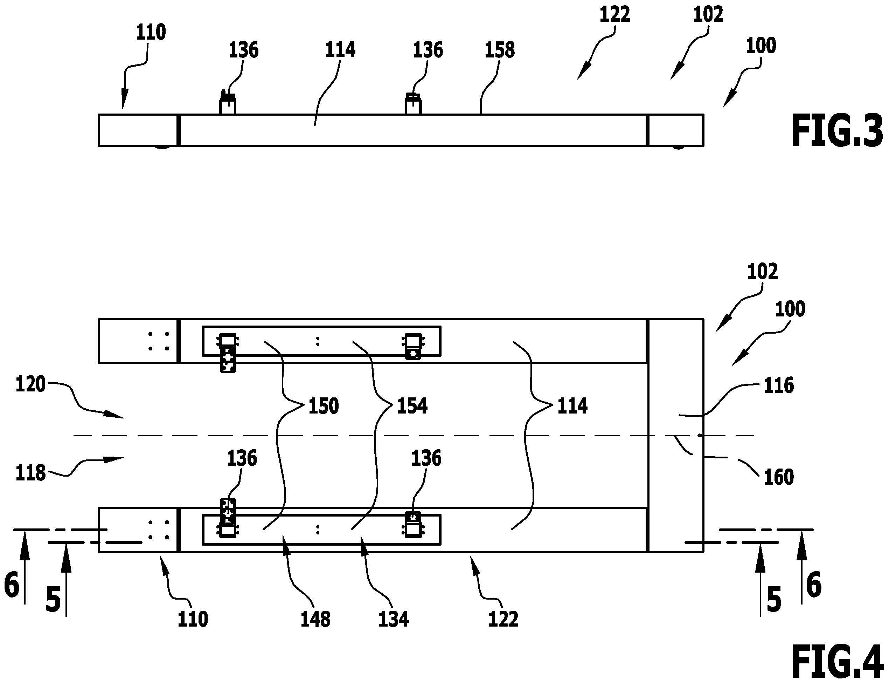

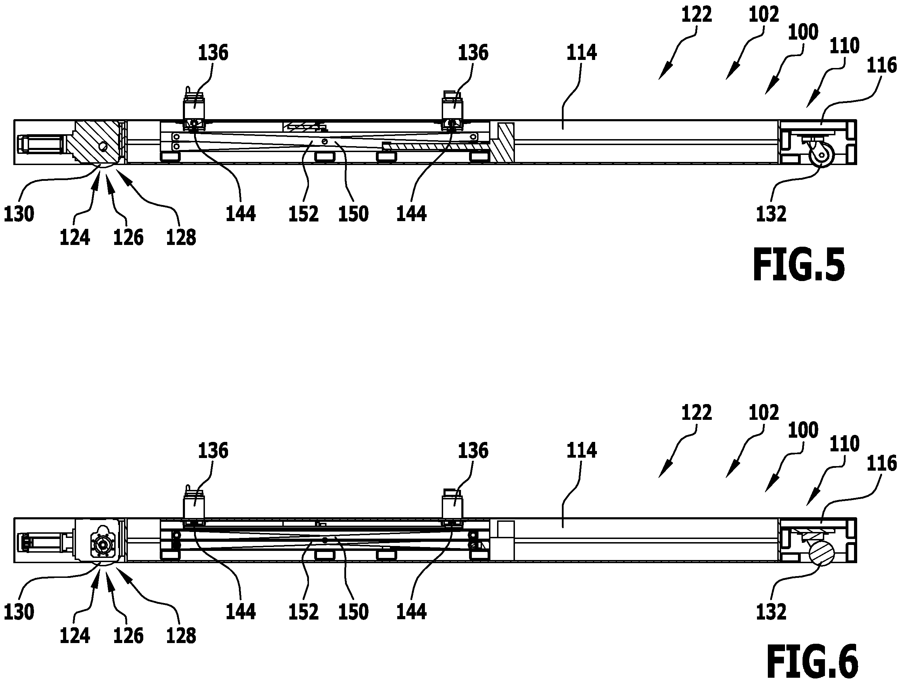

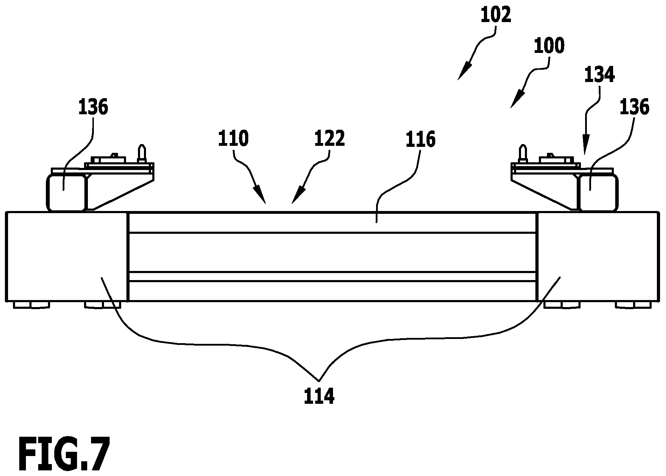

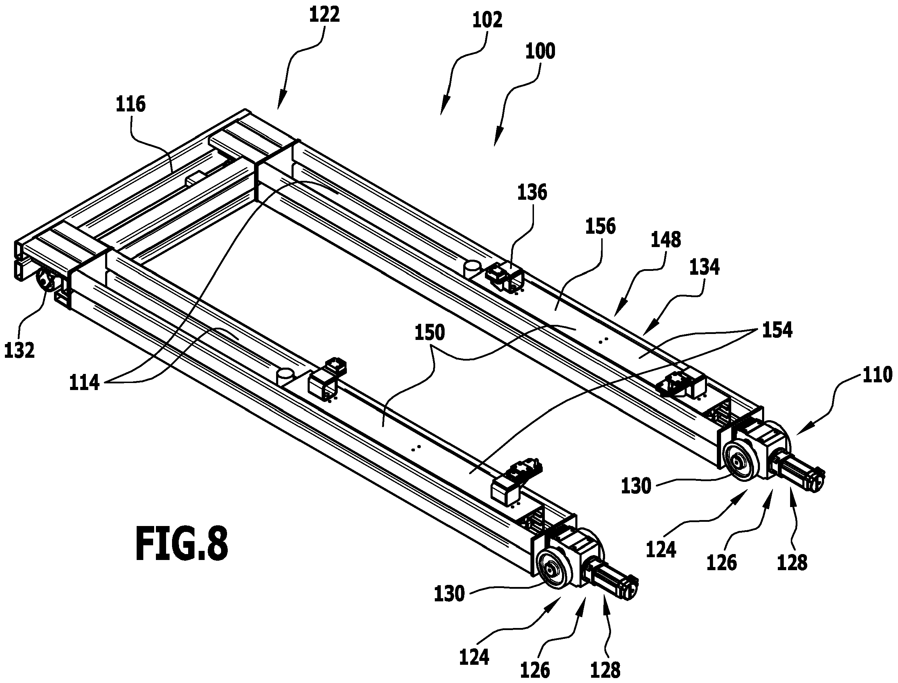

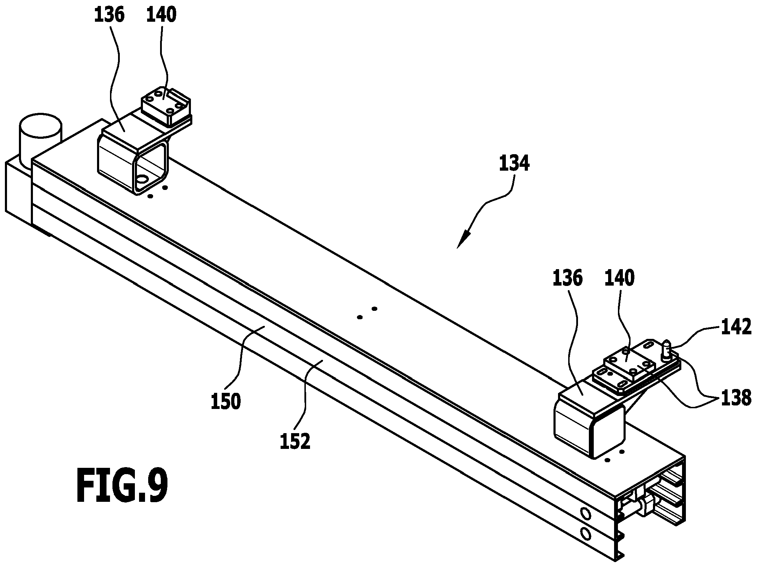

Eine in den Fig. 1 bis 16 dargestellte erste Ausführungsform eines als Ganzes mit 100 bezeichneten Transportfahrzeugs ist beispielsweise Bestandteil eines Transportsystems 102 und dient dem Transport von Werkstücken 104.

Die Werkstücke 104 sind beispielsweise Fahrzeugkarosserien 106 von Kraftfahrzeugen 108.

Das Transportfahrzeug 100 umfasst einen Fahrwagen 110, mittels welchem das Transportfahrzeug 100 als Ganzes bewegbar ist.

Der Fahrwagen 110 ist insbesondere bodengebunden, so dass das ganze Transportfahrzeug 100 insbesondere auf einem Boden 112 bewegbar, insbesondere verfahrbar, ist.

Der Fahrwagen 110 weist einen beispielsweise im Wesentlichen C-förmigen horizontalen Querschnitt auf.

Vorzugsweise weist der Fahrwagen 110 zwei Schenkel 114 und einen Verbindungsteil 116 zum Verbinden der Schenkel 114 auf.

Die Schenkel 114 und/oder der Verbindungsteil 116 sind vorzugweise quaderförmige Elemente.

Beispielsweise sind die Schenkel 114 und der Verbindungsteil 116 balkenähnlich ausgebildet.

Zwischen den Schenkeln 114 ist eine Aufnahmeöffnung 118 des Fahrwagens 110 gebildet. Die Aufnahmeöffnung 118 bildet insbesondere einen Aufnahmebereich 120 des Fahrwagens 110 oder des gesamten Transportfahrzeugs 100.

In der Aufnahmeöffnung 118, insbesondere in dem gesamten Aufnahmebereich 120, ist eine (noch zu beschreibende) Transporteinheit anordenbar und/ oder aufnehmbar.

Die Schenkel 114 und der Verbindungsteil 116 bilden insbesondere einen Grundkörper 122 des Transportfahrzeugs 100, insbesondere des Fahrwagens 110 des Transportfahrzeugs 100.

Vorzugsweise umfasst der Fahrwagen 110 eine Antriebsvorrichtung 124, welche insbesondere in die Schenkel 114 und/oder in den Verbindungsteil 116 integriert ist.

Die Antriebsvorrichtung 124 ist insbesondere als ein interner Antrieb 126 des Transportfahrzeugs 100 ausgebildet.

Die Antriebsvorrichtung 124 umfasst vorzugsweise einen oder mehrere Elektromotoren 128, mittels welchen ein oder mehrere Antriebsräder 130 des Fahrwagens 110 antreibbar sind.

Mittels der Antriebsräder 130 und/oder mittels weiterer nicht angetriebener Räder 132 liegt das Transportfahrzeug 100 auf dem Boden 112 auf, insbesondere um relativ zu dem Boden 112 bewegt zu werden.

Eine Energieversorgung für die Antriebsvorrichtung 124, insbesondere für den einen oder die mehreren Elektromotoren 128, erfolgt vorzugsweise mittels einer (noch zu beschreibenden) Induktionsvorrichtung. Eine solche Induktionsvorrichtung ist insbesondere in den Boden 112 integriert oder auf dem Boden 112 angeordnet.

Das Transportfahrzeug 100 umfasst insbesondere eine Werkstückaufnahmevorrichtung 134 zur Aufnahme eines Werkstücks 104, beispielsweise einer Fahrzeugkarosserie 106.

Die Werkstückaufnahmevorrichtung 134 umfasst insbesondere ein oder mehrere Aufnahmeelemente 136, welche Verbindungselemente 138 zum Verbinden derselben mit dem Werkstück 104 umfassen.

Beispielsweise umfassen das eine Aufnahmeelement 136 oder die mehreren Aufnahmeelemente 136 Auflageflächen 140 und/oder Pins 142, mittels welchen das Werkstück 104 zuverlässig an der Werkstückaufnahmevorrichtung 134 festlegbar, insbesondere lösbar festlegbar, ist.

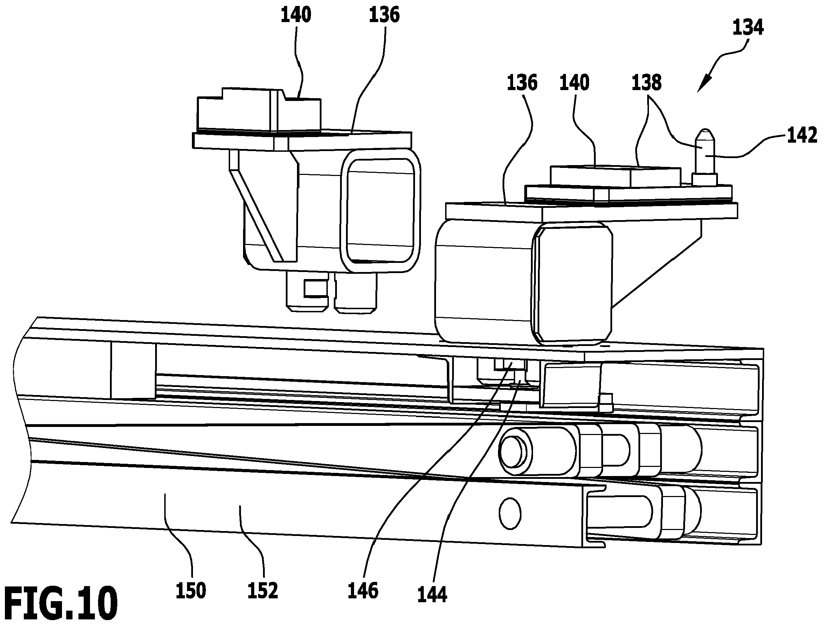

Die Aufnahmeelemente 136 sind vorzugsweise austauschbare Aufnahmeelemente 136 (siehe Fig. 10).

Die Aufnahmeelemente 136 sind vorzugsweise mittels einer Verriegelungsvorrichtung 144 lösbar an dem Transportfahrzeug 100, insbesondere an einer (noch zu beschreibenden) Handhabungsvorrichtung, angeordnet und bei Bedarf austauschbar, insbesondere um Werkstücke 104 unterschiedlicher Art und/oder Größe durch die Verwendung unterschiedlicher Aufnahmeelemente 136 einfach und zuverlässig an der Werkstückaufnahmevorrichtung 134 anordnen zu können.

Die Verriegelungsvorrichtung 144 ist beispielsweise eine Rastvorrichtung 146 zum Verrasten der Aufnahmeelemente 136.

Die Werkstückaufnahmevorrichtung 134 ist insbesondere an einer Handhabungsvorrichtung 148 des Transportfahrzeugs 100 angeordnet.

Die Handhabungsvorrichtung 148 umfasst insbesondere zwei Hubvorrichtungen 150.

Die Hubvorrichtungen 150 sind insbesondere als Scherenhubtische 152 ausgebildet.

Vorzugsweise sind die Hubvorrichtungen 150 in die Schenkel 114 des Fahrwagens 110 integriert.

Eine jede Hubvorrichtung 150 umfasst vorzugsweise ein ausfahrbares Element 154.

Das ausfahrbare Element 154 ist insbesondere aus dem Fahrwagen 110 des Transportfahrzeugs 100, insbesondere aus einem Schenkel 114 des Fahrwagens 110 des Transportfahrzeugs 100, ausfahrbar und in diesen einfahrbar.

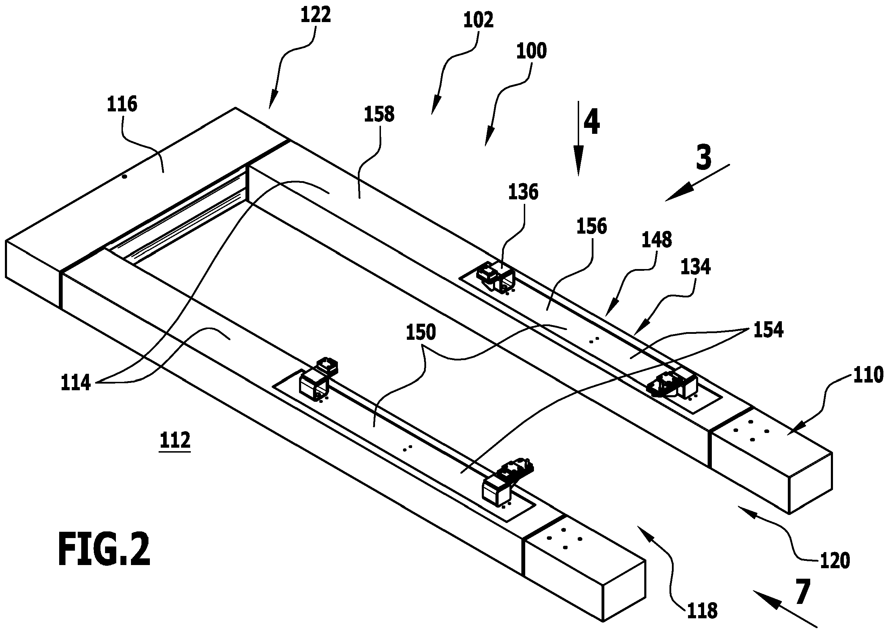

In einem in Fig. 2 dargestellten eingefahrenen Zustand der Hubvorrichtungen 150 sind die beiden ausfahrbaren Elemente 154 der beiden Hubvorrichtungen 150 vorzugsweise vollständig innerhalb einer Außenkontur der Schenkel 114 des Fahrwagens 110 angeordnet.

Insbesondere ragen die ausfahrbaren Elemente 154 vorzugsweise nicht selbst, sondern allenfalls daran angeordnete Elemente, insbesondere Aufnahmeelemente 136, in vertikaler Richtung über die Außenkontur der Schenkel 114 hinaus.

Eine Oberseite 156 eines jeden ausfahrbaren Elements 154 ist in dem in Fig. 2 dargestellten eingefahrenen Zustand der Hubvorrichtungen 150 vorzugsweise bündig mit einer Oberseite 158 eines Schenkels 114.

Die Hubvorrichtungen 150 sind vorzugsweise bezüglich einer vertikalen Längsmittelebene 160 des Transportfahrzeugs 100 spiegelsymmetrisch zueinander angeordnet und/oder spiegelsymmetrisch zueinander ausgebildet.

Vorzugsweise ist das gesamte Transportfahrzeug 100 bezüglich der vertikalen Längsmittelebene 160 spiegelsymmetrisch ausgebildet.

Die Werkstückaufnahmevorrichtung 134, insbesondere die Aufnahmeelemente 136, sind insbesondere an den ausfahrbaren Elementen 154 der Hubvorrichtung 150, beispielsweise an den Oberseiten 156 der ausfahrbaren Elemente 154 der Hubvorrichtungen 150, angeordnet.

Die Aufnahmeelemente 136 und die Werkstückaufnahmevorrichtungen 134 können somit in vertikaler Richtung nach oben und nach unten bewegt werden, indem die Hubvorrichtungen 150 betätigt werden.

Ein an der Werkstückaufnahmevorrichtung 134 angeordnetes Werkstück 104 kann somit mittels der Hubvorrichtungen 150 angehoben und abgesenkt werden.

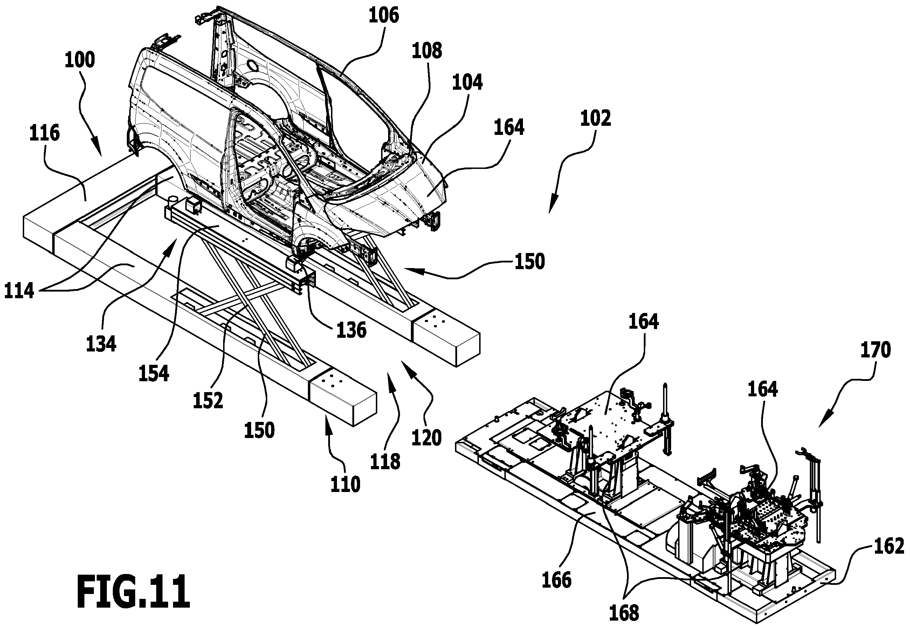

Wie insbesondere den Fig. 11 bis 13 zu entnehmen ist, ist das Transportfahrzeug 100, insbesondere der Fahrwagen 110 des Transportfahrzeugs 100, mit einer Transporteinheit 162 in Eingriff bringbar.

Die Transporteinheit 162 dient insbesondere der Aufnahme von Bauteilen 164, welche zur Fertigung, insbesondere zur Endmontage, des Werkstücks 104 an dem Werkstück 104 anordenbar sind.

Die Transporteinheit 162 ist mit dem Transportfahrzeug 100 dadurch in Eingriff bringbar, dass das Transportfahrzeug 100 relativ zu der Transporteinheit 162 bewegt wird, insbesondere mittels der Antriebsvorrichtung 124.

Das Transportfahrzeug 100 wird dabei insbesondere relativ zu der Transporteinheit 162 so bewegt, dass die Transporteinheit 162 in horizontaler Richtung in die Aufnahmeöffnung 118, insbesondere in den Aufnahmebereich 120, einführbar ist.

Die Transporteinheit 162 umfasst insbesondere eine Grundplatte 166.

Die Grundplatte 166 weist vorzugsweise eine Länge und/oder eine Breite auf, welche höchstens im Wesentlichen einer Länge bzw. einer Breite der Aufnahmeöffnung 118, insbesondere des Aufnahmebereichs 120, entspricht.

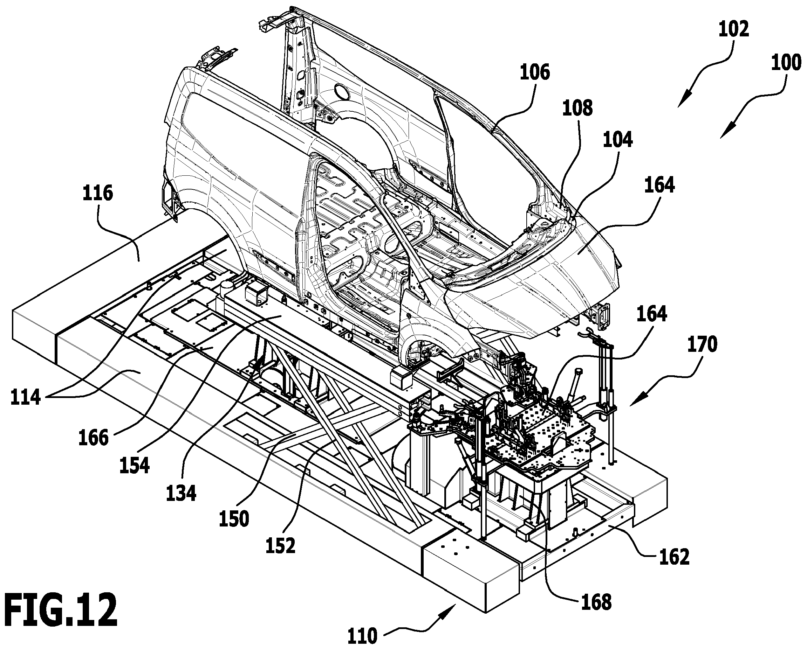

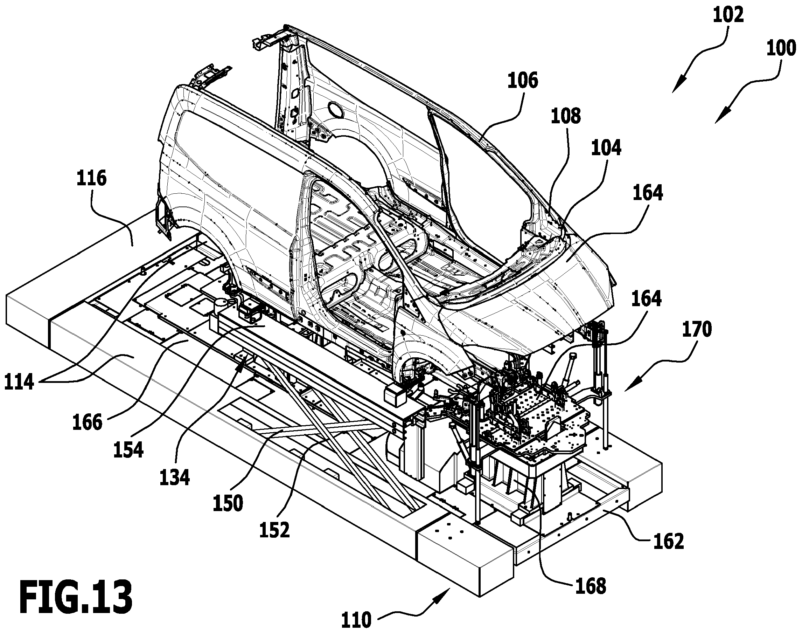

Die Grundplatte 166 füllt somit vorzugsweise die Aufnahmeöffnung 118, insbesondere den Aufnahmebereich 120, im Wesentlichen vollständig auf, wenn die Transporteinheit 162 in der Aufnahmeöffnung 118 bzw. in dem Aufnahmebereich 120 angeordnet ist (siehe Fig. 12 und 13).

Die Transporteinheit 162 umfasst vorzugsweise ferner eine oder mehrere Aufnahmen 168 zur Aufnahme der Bauteile 164, welche an dem Werkstück 104 anzuordnen sind.

Die Transporteinheit 162 ist vorzugsweise eine bodengebundene Transporteinheit 162.

Günstig kann es sein, wenn die Transporteinheit 162 eine Antriebsvorrichtung 124 umfasst. Die Transporteinheit 162 ist dann insbesondere unabhängig von dem Transportfahrzeug 100 bewegbar, insbesondere auf dem Boden 112 verfahrbar.

Es kann jedoch auch vorgesehen sein, dass die Transporteinheit 162 nur mit externer Hilfe verfahrbar ist.

Die Transporteinheit 162 ist vorzugsweise mittels des Transportfahrzeugs 100 aufnehmbar und zusammen mit dem Transportfahrzeug 100 bewegbar.

Wie den Fig. 12 und 13 zu entnehmen ist, ist das Werkstück 104 zur Montage der mittels der Transporteinheit 162 zugeführten Bauteile 164 insbesondere in vertikaler Richtung auf die Bauteile 164 absenkbar.

Das Werkstück 104 ist somit insbesondere in verschiedenen Werkpositionen, insbesondere verschiedenen Höhen, anordenbar, um die Montage der zugeführten Bauteile 164 an dem Werkstück 104 zu ermöglichen, durchzuführen und/oder zu vereinfachen.

Die Transporteinheit 162 kann insbesondere eine Hochzeitsplattform 170 sein. Eine solche Hochzeitsplattform 170 dient insbesondere der Aufnahme eines Motors oder eines Antriebsstrangs eines Kraftfahrzeugs 108.

Mittels der als Hochzeitsplattform 170 ausgebildeten Transporteinheit 162 kann somit der Motor und/oder der Antriebsstrang einfach dem Werkstück 104, insbesondere der Fahrzeugkarosserie 106, zugeführt werden, um den Motor und/oder den Antriebsstrang mit der Fahrzeugkarosserie 106 zu verbinden (sogenannte Hochzeit).

Alternativ oder ergänzend zu der Zuführung von Bauteilen 164 zu dem Werkstück 104 mittels einer oder mehrerer Transporteinheiten 162 kann vorgesehen sein, dass das Transportfahrzeug 100 mit einer Lagervorrichtung 172, insbesondere mit einem Anhängerelement 174, verbindbar, insbesondere kuppelbar ist.

Hierzu ist insbesondere ein Kupplungselement 176 vorgesehen, mittels welchem die Lagervorrichtung 172, insbesondere das Anhängerelement 174, an den Fahrwagen 110 anhängbar ist.

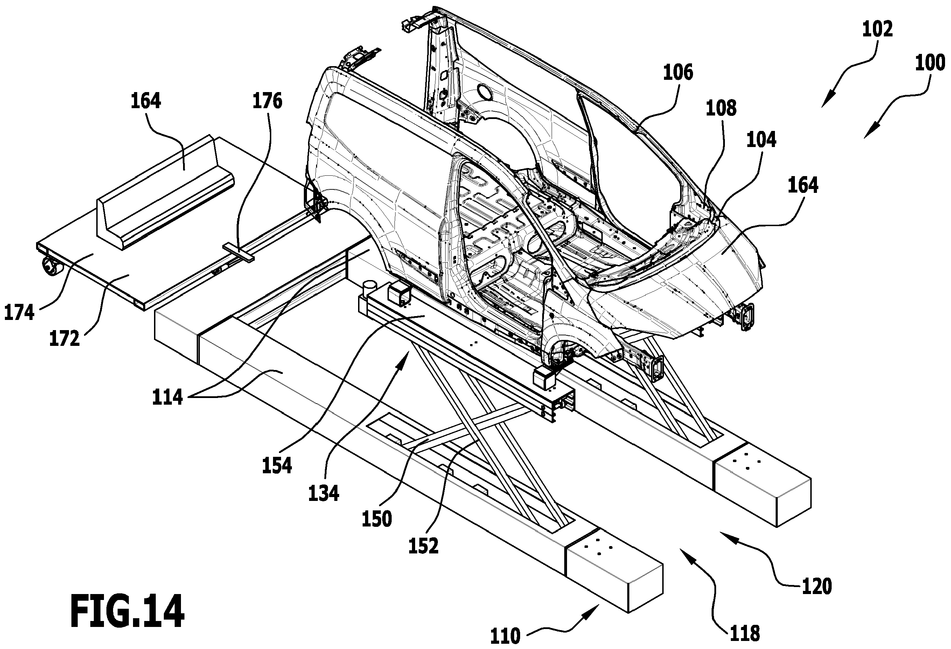

Die Lagervorrichtung 172 und/oder das Anhängerelement 174 dienen vorzugsweise der Aufnahme eines oder mehrerer Bauteile 164, beispielsweise einer Sitzbank, welche manuell oder automatisch von der Lagervorrichtung 172 oder dem Anhängerelement 174 abnehmbar und zur Montage derselben an dem Werkstück 104 dem Werkstück 104 zuführbar sind (siehe insbesondere Fig. 14).

Insbesondere bei der Verwendung mehrerer Transportfahrzeuge 100 in einem Transportsystem 102 kann vorgesehen sein, dass die Transportfahrzeuge 100 autonom und/oder unabhängig voneinander mittels der Fahrwagen 110 bewegt, insbesondere verfahren, werden.

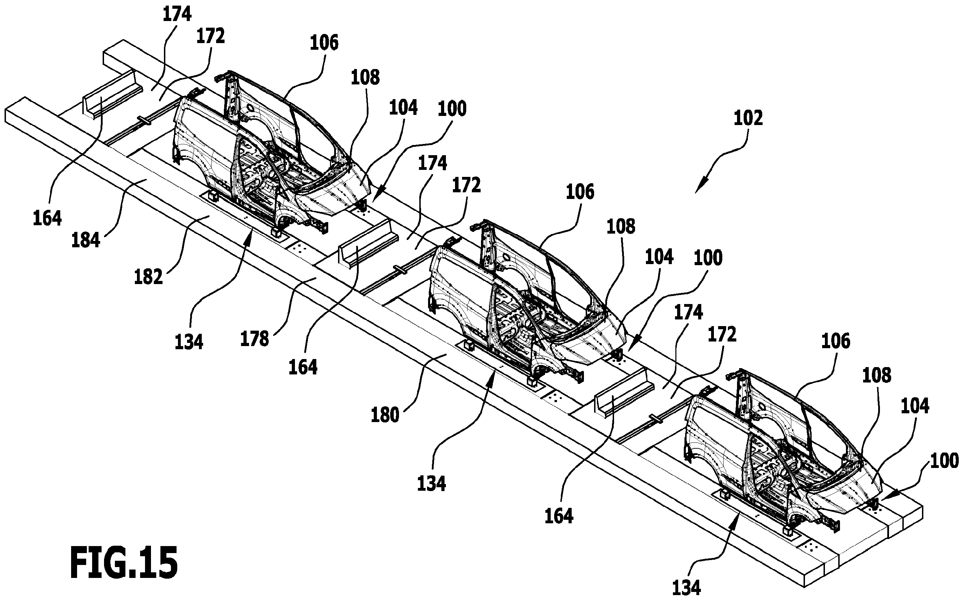

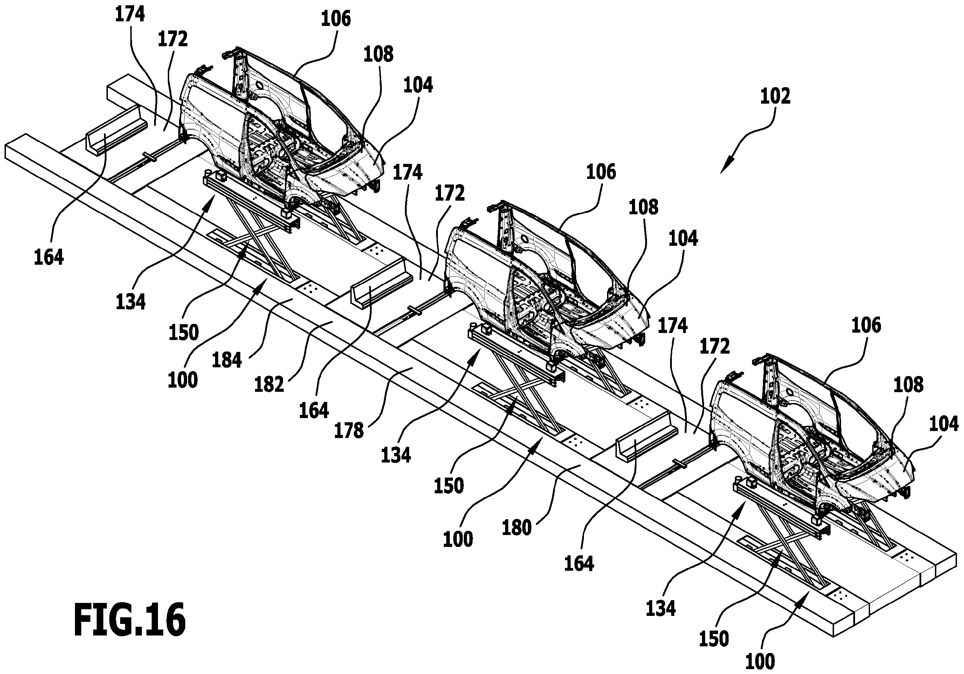

Alternativ oder ergänzend hierzu kann jedoch auch vorgesehen sein, dass das Transportsystem 102 eine Führungsvorrichtung 178 umfasst (siehe die Fig. 15 und 16).

Die Führungsvorrichtung 178 ist insbesondere eine mechanische Führungsvorrichtung 178, beispielsweise eine Schienenführung 180.

Vorzugsweise umfasst die Führungsvorrichtung 178 eine Antriebsvorrichtung 182, welche insbesondere einen externen Antrieb 184 zum Antreiben der Transportfahrzeuge 100 und der daran angeordneten Werkstücke 104 bildet.

Mittels einer Führungsvorrichtung 178 kann insbesondere eine Linienfertigung ermöglicht werden.

Wie insbesondere aus den Fig. 15 und 16 hervorgeht, können die Werkstücke 104 durch geeignete Betätigung der Hubvorrichtungen 150 dabei wahlweise in verschiedenen Höhenpositionen angeordnet werden.

Insbesondere sind die Werkstücke 104 hierdurch in verschiedenen Werkpositionen anordenbar, um verschiedene Fertigungsschritte an dem Werkstück 104 einfach durchführen zu können.

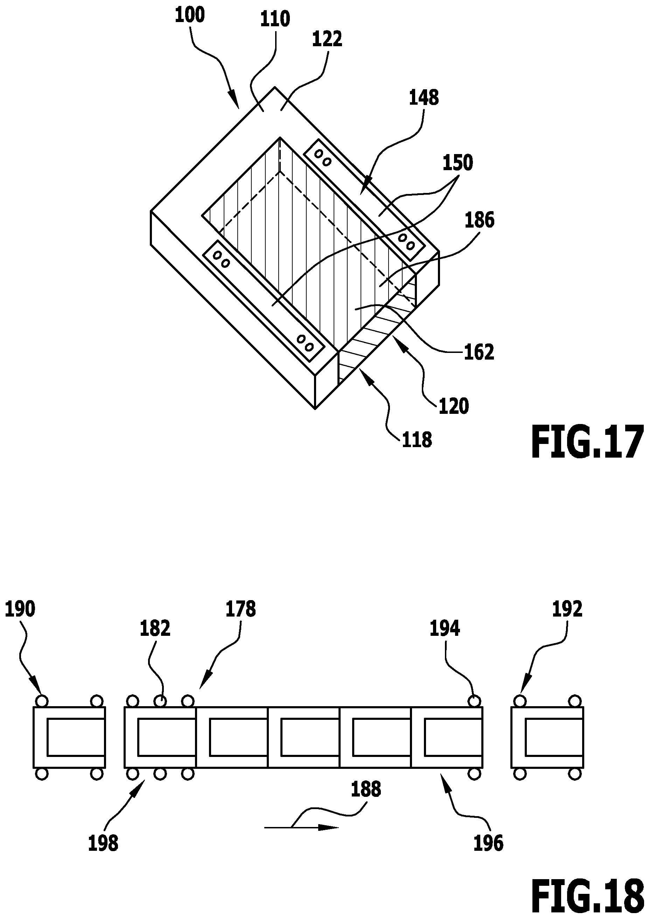

Eine in den Fig. 17 und 18 dargestellte zweite Ausführungsform eines Transportfahrzeugs 100, insbesondere eines Transportsystems 102, unterscheidet sich von der in den Fig. 1 bis 16 dargestellten ersten Ausführungsform im Wesentlichen dadurch, dass die Transporteinheit 162 eine im Wesentlichen ebene Grundplatte 166 umfasst, welche die Aufnahmeöffnung 118, insbesondere den Aufnahmebereich 120, im Wesentlichen eben auffüllt, so dass eine durchgängig begehbare Montageplattform 186 gebildet ist.

Die Aufnahmeöffnung 118 ist somit insbesondere mittels der Transporteinheit 162 verschlossen.

Wie insbesondere Fig. 18 zu entnehmen ist, eignet sich die zweite Ausführungsform des Transportfahrzeugs 100 insbesondere zur Verwendung bei einer Linienfertigung zur Fertigung der Werkstücke 104.

Die Transportfahrzeuge 100 sind dabei insbesondere ähnlich einer Schubplattenanlage (Skillet Line) mittels einer Führungsvorrichtung 178 und/oder einer Antriebsvorrichtung 182 in einer Förderrichtung 188 direkt hintereinander förderbar.

Beispielsweise ist dabei eine Kopplungsvorrichtung 190 vorgesehen, mittels welcher die Transportfahrzeuge 100 der Führungsvorrichtung 178 und/oder der Antriebsvorrichtung 182 zuführbar sind.

Mittels einer Entkopplungsvorrichtung 192 sind die Transportfahrzeuge 100 vorzugsweise von der Führungsvorrichtung 178, insbesondere der Antriebsvorrichtung 182, entfernbar.

Eine Bremsvorrichtung 194 an einem Ende 196 der mittels der Transportfahrzeuge 100 gebildeten Reihe von Transportfahrzeugen 100 dient vorzugsweise dazu, die Transportfahrzeuge 100 zusammenzuhalten.

Mittels der Kopplungsvorrichtung 190 sind die Transportfahrzeuge 100 insbesondere an einem Anfang 198 der Reihe von Transportfahrzeugen 100 dieser Reihe zuführbar.

Mittels der Entkopplungsvorrichtung 192 sind die Transportfahrzeuge 100 an dem Ende 196 der Reihe von Transportfahrzeugen 100 von der Reihe entfernbar.

Insbesondere dadurch, dass mittels der Transporteinheiten 162 bei der in den Fig. 17 und 18 dargestellten Ausführungsform des Transportfahrzeugs 100 durchgängige ebene Montageplattformen 186 gebildet sind, und dadurch, dass die Transportfahrzeuge 100 ähnlich einer Schubplattenanlage direkt hintereinander angeordnet sind, kann vorzugsweise eine große begehbare Fläche zur Montage der Werkstücke 104 bereitgestellt werden.

Im Übrigen stimmt die in den Fig. 17 und 18 dargestellte zweite Ausführungsform des Transportfahrzeugs 100, insbesondere des Transportsystems 102, hinsichtlich Aufbau und Funktion mit der in den Fig. 1 bis 16 dargestellten ersten Ausführungsform überein, so dass auf deren vorstehende Beschreibung insoweit Bezug genommen wird.

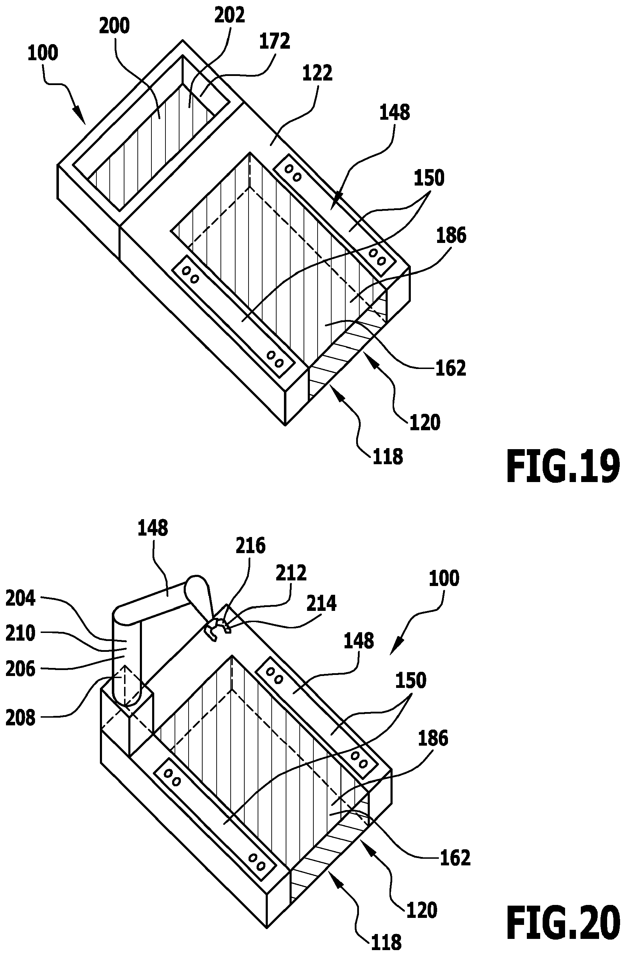

Eine in Fig. 19 dargestellte dritte Ausführungsform eines Transportfahrzeugs 100 unterscheidet sich von der in den Fig. 1 bis 16 dargestellten ersten Ausführungsform im Wesentlichen dadurch, dass anstelle eines Anhängerelements 174 eine als Werkzeughalterung 200 und/oder als Warenkorb 202 ausgebildete Lagervorrichtung 172 an dem Transportfahrzeug 100, insbesondere an dem Fahrwagen 110 des Transportfahrzeugs 100, angeordnet ist.

Die Lagervorrichtung 172, insbesondere die Werkzeughalterung 200 und/oder der Warenkorb 202, sind vorzugsweise an dem Verbindungsteil 116 des Fahrwagens 110 angeordnet.

Insbesondere ein Warenkorb 202 dient vorzugsweise zur eigenen Logistikversorgung des Transportfahrzeugs 100, so dass die an dem Werkstück 104 zu montierenden Bauteile 164 und/oder Hilfsmittel zur Montage des Werkstücks 104 in dem Warenkorb 202 mitführbar und vorzugsweise bei der Montage des Werkstücks 104 stets einfach greifbar sind.

Im Übrigen stimmt die in Fig. 19 dargestellte dritte Ausführungsform des Transportfahrzeugs 100 hinsichtlich Aufbau und Funktion mit der in den Fig. 1 bis 16 dargestellten ersten Ausführungsform überein, so dass auf deren vorstehende Beschreibung insoweit Bezug genommen wird.

Eine in Fig. 20 dargestellte vierte Ausführungsform eines Transportfahrzeugs 100 unterscheidet sich von der in den Fig. 1 bis 16 dargestellten ersten Ausführungsform im Wesentlichen dadurch, dass das Transportfahrzeug 100 zusätzlich zu der die Hubvorrichtungen 150 umfassenden Handhabungsvorrichtung 148 eine weitere Handhabungsvorrichtung 148 umfasst, welche beispielsweise eine Betätigungsvorrichtung 204, eine Bearbeitungsvorrichtung 206 und/oder eine Montagevorrichtung 208 umfasst.

Diese Handhabungsvorrichtung 148 ist insbesondere als eine Robotervorrichtung 210 ausgebildet und ermöglicht eine Betätigung des Werkstücks 104 oder von Teilen des Werkstücks 104, eine Bearbeitung des Werkstücks 104 oder von Teilen des Werkstücks 104 und/oder eine Montage von Bauteilen 164 an dem Werkstück 104.

Vorzugsweise umfasst die Handhabungsvorrichtung 148, insbesondere die Robotervorrichtung 210, ein oder mehrere Hilfsmittel 212, beispielsweise Montagehilfsmittel 214, insbesondere Werkzeuge 216.

Zusätzlich kann bei der in Fig. 20 dargestellten vierten Ausführungsform des Transportfahrzeugs 100 eine Lagervorrichtung 172, beispielsweise eine Werkzeughalterung 200, ein Warenkorb 202 und/oder ein Anhängerelement 174, gemäß der in den Fig. 1 bis 16 dargestellten ersten Ausführungsform und/oder gemäß der in Fig. 19 dargestellten dritten Ausführungsform des Transportfahrzeugs 100 vorgesehen sein.

Im Übrigen stimmt die in Fig. 20 dargestellte vierte Ausführungsform des Transportfahrzeugs 100 hinsichtlich Aufbau und Funktion mit der in den Fig. 1 bis 16 dargestellten ersten Ausführungsform überein, so dass auf deren vorstehende Beschreibung insoweit Bezug genommen wird.

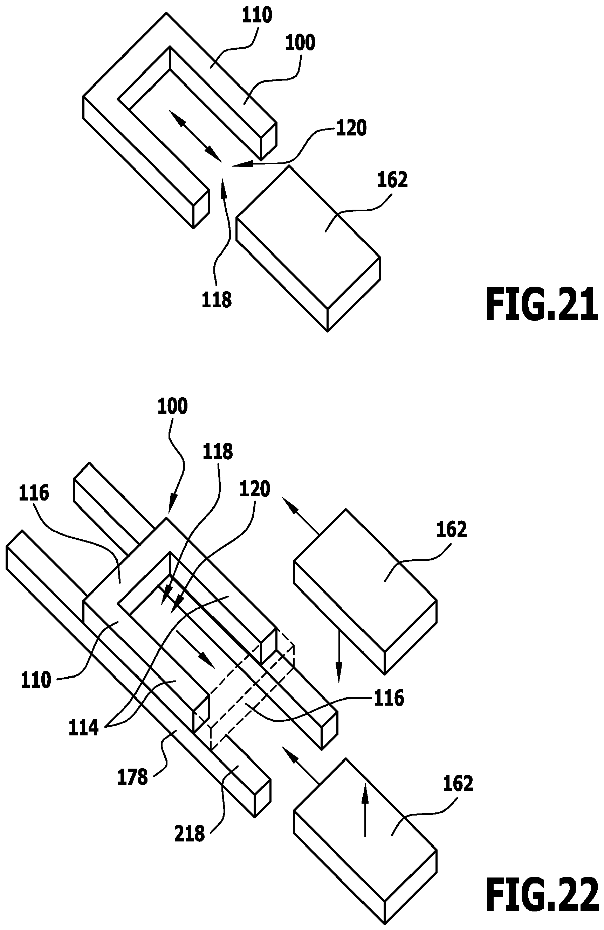

Eine in Fig. 21 dargestellte fünfte Ausführungsform des Transportfahrzeugs 100 umfasst beispielsweise eine Aufnahmeöffnung 118, insbesondere einen Aufnahmebereich 120, welcher in horizontaler Richtung zugänglich ist. Insbesondere ist eine Transporteinheit 162 durch horizontale Bewegung derselben und/oder des Transportfahrzeugs 100 in die Aufnahmeöffnung 118, insbesondere in den Aufnahmebereich 120, des Transportfahrzeugs 100 einbringbar.

Ferner kann die in Fig. 21 dargestellte fünfte Ausführungsform des Transportfahrzeugs 100 einzelne oder mehrere Merkmale und/oder Vorteile der ersten Ausführungsform des Transportfahrzeugs 100 aufweisen, so dass auf deren vorstehende Beschreibung insoweit Bezug genommen wird.

Eine in Fig. 22 dargestellte sechste Ausführungsform eines Transportfahrzeugs 100 unterscheidet sich von der in den Fig. 1 bis 16 dargestellten ersten Ausführungsform im Wesentlichen dadurch, dass die Transporteinheit 162 insbesondere in vertikaler Richtung von oben und/oder von unten in die Aufnahmeöffnung 118, insbesondere den Aufnahmebereich 120, des Transportfahrzeugs 100, insbesondere des Fahrwagens 110 des Transportfahrzeugs 100, einbringbar ist.

Beispielsweise kann vorgesehen sein, dass das Transportfahrzeug 100, insbesondere der Fahrwagen 110 des Transportfahrzeugs 100, auf Schienen 218 einer Führungsvorrichtung 178 angeordnet, insbesondere bewegbar angeordnet, ist.

Eine Transporteinheit 162 kann dann beispielsweise zwischen den Schienen 218 zugeführt und von unten in die Aufnahmeöffnung 118, insbesondere den Aufnahmebereich 120, des auf den Schienen angeordneten Transportfahrzeugs 100 eingebracht werden.

Das Transportfahrzeug 100, insbesondere der Fahrwagen 110, kann in diesem Fall auch geschlossen, insbesondere im Wesentlichen ringförmig geschlossen, ausgebildet sein.

Beispielsweise können dann zwei Verbindungsteile 116 zur Verbindung der Schenkel 114 vorgesehen sein, welche insbesondere an einander gegenüberliegenden Enden der Schenkel 114 angeordnet sind.

Im Übrigen stimmt die in Fig. 22 dargestellte sechste Ausführungsform des Transportfahrzeugs 100 hinsichtlich Aufbau und Funktion mit der in den Fig. 1 bis 16 dargestellten ersten Ausführungsform überein, so dass auf deren vorstehende Beschreibung insoweit Bezug genommen wird.

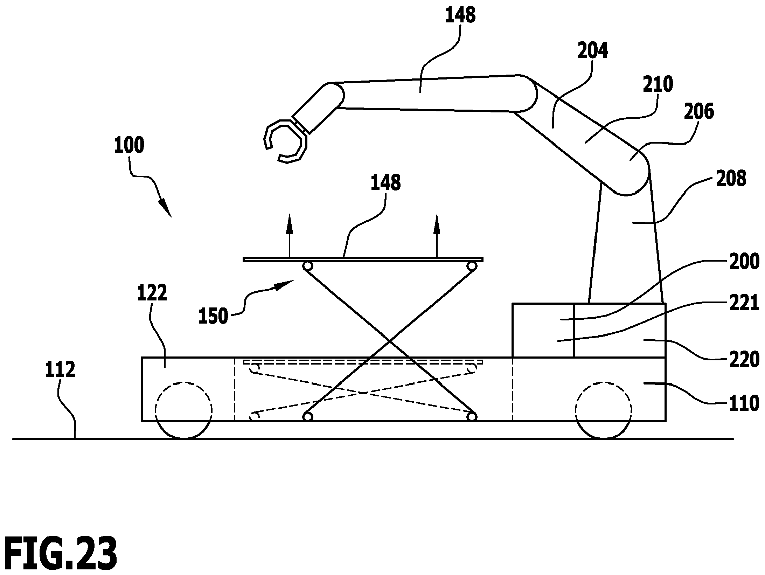

Eine in Fig. 23 dargestellte siebte Ausführungsform eines Transportfahrzeugs 100 unterscheidet sich von der in Fig. 20 dargestellten vierten Ausführungsform im Wesentlichen dadurch, dass das Transportfahrzeug 100 eine Batterievorrichtung 220 umfasst. Mittels der Batterievorrichtung 220 ist insbesondere die zum Antreiben von Elektromotoren 128 der Antriebsvorrichtung 124 und/oder einer Robotervorrichtung 210 benötigte elektrische Energie bereitstellbar.

Vorzugsweise umfasst das Transportfahrzeug 100, insbesondere alternativ oder ergänzend zu einer Batterievorrichtung 220, eine Werkzeughalterung 200, beispielsweise ein Magazin 221 zur Aufnahme von Werkzeugen 216.

Alternativ oder ergänzend hierzu kann vorgesehen sein, dass das Transportfahrzeug 100 ein Magazin 221 zur Aufnahme von Aufnahmeelementen 136 der Werkstückaufnahmevorrichtung 134 umfasst.

Insbesondere mittels der Robotervorrichtung 210 sind dann vorzugsweise automatisch Aufnahmeelemente 136 aus dem Magazin 221 entnehmbar und an den Hubvorrichtungen 150 anordenbar.

Insbesondere kann hierbei vorgesehen sein, dass mittels einer (nicht dargestellten) Sensorvorrichtung oder Speichervorrichtung ermittelbar ist, welcher Werkstücktyp an der Werkstückaufnahmevorrichtung 134 angeordnet werden soll. Mittels der Robotervorrichtung 210 kann dann eine geeignete Art von Aufnahmeelementen 136 ausgewählt und an den Hubvorrichtungen 150 angeordnet werden, um das Transportfahrzeug 100 für die Aufnahme des gewünschten Werkstücktyps vorzubereiten.

Im Übrigen stimmt die in Fig. 23 dargestellte siebte Ausführungsform des Transportfahrzeugs 100 hinsichtlich Aufbau und Funktion mit der in Fig. 20 dargestellten vierten Ausführungsform überein, so dass auf deren vorstehende Beschreibung insoweit Bezug genommen wird.

Das beschriebene Transportfahrzeug 100, insbesondere das beschriebene Transportsystem 102, eignet sich insbesondere zur Verwendung in einer Fertigungsanlage 222 zur Fertigung von Werkstücken 104, insbesondere zur Fertigung von Kraftfahrzeugen 108.

Die Fertigungsanlage 222 umfasst insbesondere eine Endmontageanlage 224, welche vorzugsweise das Transportsystem 102 umfasst.

Die Endmontageanlage 224 grenzt insbesondere an eine Fördervorrichtung 226 an, mittels welcher Werkstücke 104, insbesondere Fahrzeugkarosserien 106, aus einer Lackieranlage 228 der Fertigungsanlage 222 abführbar sind.

Die Fördervorrichtung 226 ist insbesondere eine Rollenfördervorrichtung, mittels welcher die auf sogenannten Skids 230 angeordneten Werkstücke 104, insbesondere Fahrzeugkarosserien 106, aus der Lackieranlage 228 abführbar sind.

Vorzugsweise ist eine Übergabevorrichtung 232 vorgesehen, mittels welcher Werkstücke 104, insbesondere Fahrzeugkarosserien 106, von der Fördervorrichtung 226, insbesondere von den Skids 230, abnehmbar sind.

Die Werkstücke 104, insbesondere die Fahrzeugkarosserien 106, sind mittels der Übergabevorrichtung 232 insbesondere den Transportfahrzeugen 100 zuführbar.

Die Endmontageanlage 224 umfasst insbesondere eine Startposition 234, an welcher die Übergabevorrichtung 232 angeordnet ist.

Ferner umfasst die Endmontageanlage 224 mehrere Fertigungspositionen 236.

An den Fertigungspositionen 236 sind jeweils ein oder mehrere Fertigungsschritte zur Fertigung des Werkstücks 104, insbesondere des herzustellenden Kraftfahrzeugs 108, durchführbar.

Insbesondere sind an den Fertigungspositionen 236 jeweils ein oder mehrere Bauteile 164 an der Fahrzeugkarosserie 106 anordenbar, um das Kraftfahrzeug 108 fertigzustellen.

Alternativ oder ergänzend zu den Handhabungsvorrichtungen 148 der Transportfahrzeuge 100, insbesondere alternativ oder ergänzend zu den Robotervorrichtungen 210, kann vorgesehen sein, dass die Endmontageanlage 224 stationäre Handhabungsvorrichtungen 148, insbesondere Manipulatoren 238, umfasst.

Mittels der Manipulatoren 238 sind insbesondere Betätigungsschritte, Bearbeitungsschritte und/oder Montageschritte zur Fertigstellung des Werkstücks 104 an einzelnen oder mehreren Fertigungspositionen 236 durchführbar.

Die Endmontageanlage 224 grenzt vorzugsweise an eine Logistikanlage 240, in welcher die an dem Werkstück 104 anzuordnenden Bauteile 164 gelagert sind.

In der Logistikanlage 240 sind insbesondere Transporteinheiten 162 mit Bauteilen 164 bestückbar.

An Aufnahmepositionen 242 sind die mit Bauteilen 164 bestückten Transporteinheiten 162 mittels der Transportfahrzeuge 100 aufnehmbar.

Einzelne oder mehrere Fertigungspositionen 236 sind vorzugsweise bezüglich einer Förderrichtung 188 der Transportfahrzeuge 100 und/oder der Werkstücke 104 in Reihe hintereinander und/oder parallel nebeneinander angeordnet.

Beispielsweise kann die Endmontageanlage 224 mehrere in Reihe nacheinander angeordnete Fertigungspositionen 236 umfassen, so dass insbesondere eine Linienfertigung 244 gebildet ist.

Alternativ oder ergänzend hierzu kann vorgesehen sein, dass die Endmontageanlage 224 mehrere bezüglich der Förderrichtung 188 parallel zueinander angeordnete Fertigungspositionen 236 umfasst.

Diese Fertigungspositionen 236 sind insbesondere Fertigungspositionen 236 einer Boxenfertigung 246 der Endmontageanlage 224.

Die Boxenfertigung 246 dient insbesondere zur Durchführung der sogenannten Hochzeit, das heißt der Verbindung eines Antriebsstrangs mit der Fahrzeugkarosserie 106.

Eine Abgabeposition 248 der Endmontageanlage 224 dient insbesondere der Abgabe der Transporteinheiten 162 von den Transportfahrzeugen 100 an die Logistikanlage 240, insbesondere nachdem die Bauteile 164 von einer Transporteinheit 162 entfernt und an dem Werkstück 104 montiert wurden.

Schließlich ist bei der Endmontagelanlage 224 noch eine Endposition 250 vorgesehen, an welcher die fertiggestellten Werkstücke 104, insbesondere die fertiggestellten Kraftfahrzeuge 108, von den Transportfahrzeugen 100 entfernbar sind.

Zur Energieversorgung und/oder zur Führung der Transportfahrzeuge 100 ist insbesondere eine Induktionsvorrichtung 252 vorgesehen.

Die Induktionsvorrichtung 252 umfasst insbesondere eine oder mehrere Induktionsschleifen zur Übertragung von elektrischer Energie auf die Transportfahrzeuge 100, insbesondere auf die Fahrwagen 110 der Transportfahrzeuge 100, und/oder zur elektronischen Führung der Transportfahrzeuge 100 längs vorgegebener Wege.

Günstig kann es sein, wenn das Transportfahrzeug 100, insbesondere sämtliche Transportfahrzeuge 100, einen oder mehrere Informationsträger 254 umfassen. Ein solcher Informationsträger 254 kann insbesondere als Smart-Tag oder Smart-Chip ausgebildet sein.

Mittels des Informationsträgers 254 können vorzugsweise Informationen über das herzustellende Werkstück 104, insbesondere das herzustellende Kraftfahrzeug 108, aufgenommen und/oder gespeichert werden. Auf diese Weise kann an den einzelnen Fertigungspositionen 236 und/oder an der Aufnahmeposition 242 der Logistikanlage 240 überprüft und/oder gewährleistet werden, dass die korrekten Fertigungsschritte durchgeführt und/oder die richtigen Bauteile 164 an dem Werkstück 104 angeordnet werden.

Die vorstehend beschriebene Endmontageanlage 224 und somit auch die vorstehend beschriebenen Transportfahrzeuge 100 funktionieren wie folgt:
Zunächst nicht mit Werkstücken 104 bestückte Transportfahrzeuge 100 werden der Startposition 234 der Endmontageanlage 224 zugeführt.

Beispielsweise mittels des Informationsträgers 254 wird dann ermittelt oder vorgegeben, welcher Werkstücktyp von dem Transportfahrzeug 100 aufgenommen werden soll.

Beispielsweise mittels der Robotervorrichtung 210 werden dann geeignete Aufnahmeelemente 136 ausgewählt, aus dem Magazin 221 entnommen und an den ausfahrbaren Elementen 154 der Hubvorrichtungen 150 angeordnet.

Das Transportfahrzeug 100 ist somit zur Aufnahme des gewünschten Werkstücks 104 bereit.

Mittels der Übergabevorrichtung 232 wird dann das Werkstück 104 von der Fördervorrichtung 226 der Lackieranlage 228 entfernt und an dem Transportfahrzeug 100, insbesondere an der Werkstückaufnahmevorrichtung 134 des Transportfahrzeugs 100, angeordnet.

Das Werkstück 104 ist zu diesem Zeitpunkt insbesondere die Fahrzeugkarosserie 106.

Mittels des Transportfahrzeugs 100 wird das Werkstück 104 nacheinander mehreren Fertigungspositionen 236 zugeführt, an welchen Fertigungsschritte an dem Werkstück 104 durchgeführt werden, insbesondere mittels Manipulatoren 238 und/oder Robotervorrichtungen 210.

Zur Aufnahme von weiteren an dem Werkstück 104 anzuordnenden Bauteilen 164 wird das Transportfahrzeug 100 zusammen mit dem daran angeordneten Werkstück 104 der Aufnahmeposition 242 zugeführt.

In dieser Aufnahmeposition 242 kann insbesondere eine Transporteinheit 162, welche mit Bauteilen 164 bestückt ist, in die Aufnahmeöffnung 118, insbesondere den Aufnahmebereich 120, des Transportfahrzeugs 100 eingeführt werden.

Um eine Kollision der Transporteinheit 162 und/oder der an der Transporteinheit 162 angeordneten Bauteile 164 mit dem Werkstück 104 zu vermeiden, wird das Werkstück 104 zuvor mittels der Hubvorrichtungen 150 angehoben (siehe insbesondere Fig. 11).

Die Transporteinheit 162 und die daran angeordneten Bauteile 164 werden somit in den Aufnahmepositionen 242 insbesondere unter dem Werkstück 104 angeordnet (siehe insbesondere Fig. 12).

Nach der Aufnahme einer Transporteinheit 162 wird das Transportfahrzeug 100 weiteren Fertigungspositionen 236 zugeführt.

Beispielsweise kann eine Boxenfertigung 246 vorgesehen sein, um die an der Transporteinheit 162 angeordneten Bauteile 164 an dem Werkstück 104 zu montieren.

Nach erfolgter Montage der Bauteile 164 an dem Werkstück 104 wird das Transportfahrzeug 100 zusammen mit dem Werkstück 104 in die Abgabeposition 248 gebracht.

In der Abgabeposition 248 wird die Transporteinheit 162 von dem Transportfahrzeug 100 entfernt, insbesondere aus der Aufnahmeöffnung 118 oder dem Aufnahmebereich 120 entfernt.

Die Transporteinheit 162 wird dann in der Logistikanlage 240 weiterverwendet, insbesondere erneut mit Bauteilen 164 bestückt und erneut der Aufnahmeposition 242 zugeführt.

Die Transporteinheit 162 steht dann zur Fertigung eines weiteren Werkstücks 104 erneut zur Verfügung.

Nach der Abgabe der Transporteinheit 162 an der Abgabeposition 248 wird das Transportfahrzeug 100 gegebenenfalls weiteren Fertigungspositionen 236 zugeführt, um die restlichen Fertigungsschritte zur Fertigstellung des Werkstücks 104, insbesondere des Kraftfahrzeugs 108, durchzuführen.

An der Endposition 250 wird das nunmehr fertiggestellte Werkstück 104, insbesondere das fertiggestellte Kraftfahrzeug 108, von dem Transportfahrzeug 100 entfernt.

Das dann nicht mehr mit einem Werkstück 104 bestückte Transportfahrzeug 100 steht dann zur erneuten Verwendung, insbesondere zur Herstellung eines weiteren Werkstücks 104, zur Verfügung.

Insbesondere wird das Transportfahrzeug 100 dann erneut der Startposition 234 zugeführt.

Vor der erneuten Zuführung zu der Startposition 234 kann das Transportfahrzeug 100 einer (nicht dargestellten) Zwischenposition, beispielsweise einer Parkposition, zugeführt werden.

Mittels der Induktionsvorrichtung 252 wird während der Endmontage das Transportfahrzeug 100 mit Energie versorgt und zugleich längs vorgegebener Wege geführt.

Dadurch, dass selbstfahrende Transportfahrzeuge 100 zum Transport der Werkstücke 104 während der Endmontage derselben vorgesehen sind, ist die Endmontageanlage 224 flexibel ausgebildet. Insbesondere kann die Endmontageanlage 224 zur Fertigung unterschiedlicher Werkstücke 104 verwendet oder zumindest einfach umgerüstet werden, um unterschiedliche Werkstücke 104 fertigen zu können.

## Patentansprüche

1. Transportfahrzeug (100) zum Transportieren von Werkstücken (104) bei der Fertigung derselben, umfassend:
- einen Fahrwagen (110), mittels welchem das Transportfahrzeug (100) und ein daran angeordnetes Werkstück (104) als Ganzes bewegbar sind;
- eine Werkstückaufnahmevorrichtung (134) zur Aufnahme des Werkstücks (104),
**dadurch gekennzeichnet, dass** mindestens eine Handhabungsvorrichtung (148) eine oder mehrere Hubvorrichtungen (150) zum Anheben und/oder Absenken des Werkstücks (104) relativ zu dem Fahrwagen (110) umfasst und dass der Fahrwagen (110) des Transportfahrzeugs (100) eine Antriebsvorrichtung (124) zum Fortbewegen des Transportfahrzeugs (100) umfasst, welche in den Fahrwagen (110) integriert ist, wobei der Fahrwagen (110) autonom bewegbar ist und wobei der Fahrwagen (110) ein bodengebundener Fahrwagen (110) ist.

2. Transportfahrzeug (100) nach Anspruch 1, **dadurch gekennzeichnet, dass** die Werkstückaufnahmevorrichtung (134) mehrere auswechselbare Aufnahmeelemente (136) zur Aufnahme von Werkstücken (104) unterschiedlicher Art und/oder Größe umfasst.

3. Transportfahrzeug (100) nach Anspruch 2, **dadurch gekennzeichnet, dass** mindestens ein Aufnahmeelement (136) ein Verbindungselement, beispielsweise einen Vorsprung und/oder einen Pin, umfasst, welches mit einem Vorsprung und/oder einer Aussparung und/oder einer Aufnahme eines Werkstücks (104) und/oder der Handhabungsvorrichtung (148) in Eingriff bringbar ist, insbesondere lösbar an dem Werkstück (104) und/oder an der Handhabungsvorrichtung (148) festlegbar ist.

4. Transportfahrzeug (100) nach einem der Ansprüche 2 oder 3, **dadurch gekennzeichnet, dass** die Werkstückaufnahmevorrichtung (134) eine Verriegelungsvorrichtung umfasst, mittels welcher ein oder mehrere Aufnahmeelemente (136) der Werkstückaufnahmevorrichtung (134) an einer Handhabungsvorrichtung (148), beispielsweise an einer oder mehreren Hubvorrichtungen (150) der Handhabungsvorrichtung (148), lösbar festlegbar sind.

5. Transportfahrzeug (100) nach einem der Ansprüche 1 bis 4, **dadurch gekennzeichnet, dass** das Transportfahrzeug (100) im eingefahrenen Zustand der Handhabungsvorrichtung (148), insbesondere der Hubvorrichtungen (150), eine Gesamthöhe von höchstens ungefähr 40 cm, beispielsweise höchstens ungefähr 30 cm, insbesondere ungefähr 25 cm, aufweist.

6. Transportsystem (102) zum Transport von Werkstücken (104) bei der Fertigung derselben, umfassend ein oder mehrere Transportfahrzeuge (100) nach einem der Ansprüche 1 bis 5.

7. Transportsystem (102) nach Anspruch 6, **dadurch gekennzeichnet, dass** das Transportsystem (102) eine Führungsvorrichtung (178) zur Führung des einen Transportfahrzeugs (100) oder der mehreren Transportfahrzeuge (100) längs vorgegebener oder vorgebbarer Wege umfasst.

8. Transportsystem (102) nach einem der Ansprüche 6 oder 7, **dadurch gekennzeichnet, dass** das Transportsystem (102) eine Führungsvorrichtung (178) umfasst,
a) welche durch Vorprogrammieren von Wegen und/oder durch Steuerung mittels GPS-Sensoren programmierbar, steuerbar und/oder regelbar ist; und/oder
b) welche eine elektrische oder elektronische Führungsvorrichtung (178) ist und/oder mittels welcher die Transportfahrzeuge (100) durch geeignete Programmierung, Steuerung und/oder Regelung autonom führbar sind.

9. Transportsystem (102) nach einem der Ansprüche 6 bis 8, **dadurch gekennzeichnet, dass** das Transportsystem (102) eine Kommunikationsvorrichtung und/oder einen oder mehrere Informationsträger, beispielsweise sogenannte Smart-Chips, umfasst, wobei optional vorgesehen ist, dass mittels der Kommunikationsvorrichtung und/oder mittels des einen oder der mehreren Informationsträger Informationen über die Positionen der Transportfahrzeuge (100) und/oder die daran angeordneten Werkstücke (104) aufnehmenbar, speicherbar und/oder weitergebbar sind.

10. Fertigungsanlage (222) zur Fertigung von Werkstücken (104), insbesondere Kraftfahrzeugen (108), umfassend ein Transportsystem (102) nach einem der Ansprüche 6 bis 9, **dadurch gekennzeichnet, dass** vorzugsweise jedem Werkstück (104), insbesondere jeder Fahrzeugkarosserie (106) eines zu fertigenden Kraftfahrzeugs (108) und/oder jedem zu fertigenden Kraftfahrzeug (108), jeweils ein Transportfahrzeug (100) zugeordnet ist.

11. Fertigungsanlage (222) nach Anspruch 10, **dadurch gekennzeichnet, dass** die Fertigungsanlage (222) eine Fertigungsanlage (222) zur Fertigung von Kraftfahrzeugen (108) ist und dass mittels Transportfahrzeugen (100) des Transportsystems (102) Fahrzeugkarosserien (106) der zu fertigenden Kraftfahrzeuge (108) aufnehmbar und nacheinander verschiedenen Fertigungspositionen (236) zuführbar sind.

12. Fertigungsanlage (222) nach einem der Ansprüche 10 oder 11, **dadurch gekennzeichnet, dass** das Transportsystem (102) Bestandteil einer Endmontageanlage (224) der Fertigungsanlage (222) ist und dass die Fahrzeugkarosserien (106) der zu fertigenden Kraftfahrzeuge (108) von einer Lackieranlage (228) der Fertigungsanlage (222), insbesondere direkt, den Transportfahrzeugen (100) des Transportsystems (102) zuführbar und/oder als Bestandteil von fertiggestellten Kraftfahrzeugen (108) von den Transportfahrzeugen (100) entfernbar sind.

13. Fertigungsanlage (222) nach einem der Ansprüche 10 bis 12, **dadurch gekennzeichnet, dass** die Fertigung eine Behandlung eines Werkstücks (104) ist.

14. Fertigungsanlage (222) nach einem der Ansprüche 10 bis 13, **dadurch gekennzeichnet, dass**
a) bei der Fertigung der Werkstücke (104) eine Linienproduktion vorgesehen ist; und/oder
b) bei der Fertigung der Werkstücke (104) eine Boxenfertigung vorgesehen ist; und/oder
c) für unterschiedliche Fertigungsschritte bei der Fertigung der Werkstücke (104) wahlweise eine Linienproduktion oder eine Boxenfertigung vorgesehen ist.

15. Fertigungsverfahren zum Fertigen von Werkstücken (104), insbesondere Kraftfahrzeugen (108), umfassend:
- Anordnen eines oder mehrerer Werkstücke (104) an einer Werkstückaufnahmevorrichtung (134) eines Transportfahrzeugs (100);
- Autonomes Bewegen des Transportfahrzeugs (100) samt des einen oder der mehreren daran angeordneten Werkstücke (104) mittels eines bodengebundenen Fahrwagens (110) des Transportfahrzeugs (100), wobei der Fahrwagen (110) eine Antriebsvorrichtung (124) zum Fortbewegen des Transportfahrzeugs (100) umfasst, welche in den Fahrwagen (110) integriert ist;
- Anheben und/oder Absenken des Werkstücks (104) relativ zu dem Fahrwagen (110) mittels einer oder mehrerer Hubvorrichtungen (150) einer Handhabungsvorrichtung (148).

16. Fertigungsverfahren nach Anspruch 15, **dadurch gekennzeichnet, dass** das Werkstück (104) mittels des Transportfahrzeugs (100) nacheinander verschiedenen Fertigungspositionen (236) zugeführt wird.
